(19) Europäisches Patentamt
European Patent Office
Office européen des brevets

(11) **EP 3 760 038 A1**

(12) **EUROPEAN PATENT APPLICATION**
published in accordance with Art. 153(4) EPC

(43) Date of publication:
06.01.2021 Bulletin 2021/01

(21) Application number: 18907552.6

(22) Date of filing: 28.02.2018

(51) Int Cl.:
*A01K 1/015* $^{(2006.01)}$          *A01K 1/01* $^{(2006.01)}$
*A01K 1/035* $^{(2006.01)}$

(86) International application number:
**PCT/JP2018/007630**

(87) International publication number:
**WO 2019/167191 (06.09.2019 Gazette 2019/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(71) Applicant: **Unicharm Corporation
Shikokuchuo-shi, Ehime 799-0111 (JP)**

(72) Inventors:
• **ONISHI, Hideyuki**
  **Kanonji-shi, Kagawa 769-1602 (JP)**
• **SASANO, Yasuhiro**
  **Kanonji-shi, Kagawa 769-1602 (JP)**

(74) Representative: **Staeger & Sperling
Partnerschaftsgesellschaft mbB
Sonnenstraße 19
80331 München (DE)**

(54) **ANIMAL EXCREMENT DISPOSAL SHEET**

(57)    Provided is an animal excrement disposal sheet capable of preventing leakage of urine excreted by an animal to the outside in the plane direction. The animal excrement disposal sheet (1) comprises a central part ($A_1$), which is positioned at the center of the animal excrement disposal sheet and provided as an area where a front face sheet (2), an absorbent body (3) and a back face sheet (4) overlap in the depth direction, and an outer peripheral part ($A_2$) extending outward from the outer periphery of the central part toward the outer periphery of the animal excrement disposal sheet. The animal excrement disposal sheet is provided with a waterproof part (6) containing a hydrophobic agent, said waterproof part existing in the outer peripheral part in such a state as to surround the central part and being disposed in the depth direction from the surface on a first face ($F_1$) side of the back face sheet to the surface on a first face side of the front face sheet.

FIG. 1

EP 3 760 038 A1

**Description**

FIELD

The present invention relates to an animal excrement process sheet which is used when animals such as dogs, etc., are kept.

BACKGROUND

An animal excrement process sheet for processing excrement such as urine, etc., excreted by animals such as dogs, etc., is known. As an example thereof, Patent literature 1 discloses a pet sheet. This pet sheet includes a liquid permeable top sheet, a liquid impermeable back sheet, and an absorbent body which intervenes between the top sheet and the back sheet, and the top sheet and the back sheet are joined at side end portions. Further, in at least one pair of side end portions which are opposed to each other, a flap portion which stands up from the sheet surface is formed parallel to the sheet edge portion. According to Patent literature 1, this pet sheet blocks urine excreted in the vicinity of the edge portion of the pet sheet by the flap portion, whereby can prevent the urine from leaking outside from the edge portion of the pet sheet.

[CITATION LIST]

[PATENT LITERATURE]

[PTL 1] Japanese Unexamined Patent Publication No. H10 - 313721

SUMMARY

[TECHNICAL PROBLEM]

However, in the animal excrement process sheet such as the pet sheet of Patent literature 1, there are possibilities that the flap is folded by the pressure of packaging when packaging the sheet or is stepped on by pets when the sheet is being used, whereby the flap cannot stand up from the sheet surface and is to be in a state of being crushed or lying down. In such cases, there may be that what we call "a transmitting leakage" may occur in which urine excreted by pets leaks to the outer side in the surface direction along the sheet surface. In addition, when the flap which blocks urine is configured so as to include a hydrophilic top sheet, there may be that what we call "a bleeding leakage" may occur in which urine leaks to the outer side in the surface direction along the inside of the hydrophilic top sheet.

Accordingly, the object of the present invention is to provide an animal excrement process sheet which is capable of making it difficult for urine excreted by animals to leak to the outer side in the surface direction.

[SOLUTION TO PROBLEM]

The animal excrement process sheet according to the present invention is (1) an animal excrement process sheet which includes a liquid permeable top sheet, a liquid impermeable back sheet, and an absorbent body that is positioned between the top sheet and the back sheet, the animal excrement process sheet comprising: a first surface which is a supply surface of excrement, and a second surface which is an opposite surface of the first surface, a center portion which is positioned at a center of the animal excrement process sheet, in a plan view, and is partitioned as a portion in which the top sheet, the absorbent body, and the back sheet overlap in a thickness direction, and an outer periphery portion which surrounds the center portion, extends from an outer edge of the center portion toward an outer edge of the animal excrement process sheet, and in which the top sheet and the back sheet are joined in the thickness direction, wherein the animal excrement process sheet further comprises: a water preventing portion which extends in the outer periphery portion so as to surround the center portion, and includes a hydrophobic agent which is arranged in the thickness direction from a surface on a first surface side of the back sheet across a surface on a first surface side of the top sheet.

In the present animal excrement process sheet, in the outer periphery portion, the hydrophobic agent is arranged in the thickness direction from the surface on the first surface side of the back sheet across the surface on the first surface side of the top sheet. Accordingly, even when urine excreted from animals moves to the outer side in the surface direction along the surface of the top sheet, by the hydrophobic agent which is arranged in the vicinity of the surface of the top sheet, such movement can be suppressed. Therefore, "the transmitting leakage" of urine can be suppressed. Further, the water preventing portion 6 is formed by a hydrophobic agent, whereby even when the animal excrement process sheet 1 is packed or is stepped on by animals, it is difficult for the water preventing action to be deteriorated, and the function as the water preventing portion 6 can be sufficiently exerted, whereby "the transmitting leakage" can be stably suppressed. Still further, even when urine excreted from animals moves to the outer side in the surface direction along the inside of the top sheet, by the hydrophobic agent which is arranged across the thickness direction inside the top sheet, such movement can be suppressed. Accordingly, "the bleeding leakage" of urine can be suppressed. Therefore, it is possible to make it difficult for urine excreted by animals to leak to the outer side in the surface direction.

The animal excrement process sheet according to the present invention may be (2) the animal excrement process sheet according to the above-mentioned (1), wherein the top sheet is configured by a sheet - like fiber structure body, and in the water preventing portion, the hydrophobic agent covers at least surfaces of configuration fibers of the fiber structure body.

In a case in which urine moves in the surface or inside of the fiber structure body, the urine moves mainly along the surface of the configuration fibers. Accordingly, in the present animal excrement process sheet, the hydrophobic agent is made to cover the surface of the configuration fibers. Therefore, even when urine excreted from animals moves to the outer side in the surface direction along the surface or the inside of the top sheet, by the hydrophobic agent which is arranged on the surface of the configuration fibers, such movement can be suppressed in a greater degree.

The animal excrement process sheet according to the present invention may be (3) the animal excrement process sheet according to the above-mentioned (1) or (2), wherein the top sheet is configured by a sheet - like fiber structure body, and in the water preventing portion, the hydrophobic agent is filled at least in a void in configuration fibers of the fiber structure body.

In a case in which urine moves in the surface or inside of the fiber structure body, in the void in the configuration fibers, the urine moves mainly along the surface of the configuration fibers. Accordingly, in the present animal excrement process sheet, the hydrophobic agent is filled in the void in the configuration fibers. Therefore, even when urine excreted from animals moves along the surface or the inside of the top sheet, by the hydrophobic agent which is filled in the void in the configuration fibers, such movement can be suppressed in a greater degree.

The animal excrement process sheet according to the present invention may be (4) the animal excrement process sheet according to any one of the above-mentioned (1) to (3), wherein a width of a portion in the water preventing portion which corresponds to a region on the first surface side of the top sheet is wider than a width of a portion in the water preventing portion which corresponds to a region on a second surface side of the top sheet.

In the present animal excrement process sheet, the width of the portion in the water preventing portion which corresponds to the region on the first surface side of the top sheet is designed to be wider than the width of the portion which corresponds to the region on the second surface side. Accordingly, even when urine excreted from animals moves along the inside of the top sheet and reaches in the vicinity of the water preventing portion, the leakage to the surface on the first surface side of the top sheet can be suppressed in a greater degree. Therefore, "the transmitting leakage" of urine can be suppressed in a greater degree.

The animal excrement process sheet according to the present invention may be (5) the animal excrement process sheet according to any one of the above-mentioned (1) to (3), wherein a width of a portion in the water preventing portion which corresponds to a region on a second surface side of the top sheet is wider than a width of a portion in the water preventing portion which corresponds to a region on the first surface side of the top sheet.

In the present animal excrement process sheet, the width of the portion in the water preventing portion which corresponds to the region on the second surface side of the top sheet is designed to be wider than the width of the portion which corresponds to the region on the first surface side. Accordingly, even when urine excreted from animals moves along the inside of the top sheet and reaches in the vicinity of the water preventing portion, the leakage to the surface on the second surface side of the top sheet, that is, the leakage to the outer side along between the top sheet and the back sheet, can be suppressed in a greater degree. Therefore, "the bleeding leakage" of urine can be suppressed in a greater degree.

The animal excrement process sheet according to the present invention may be (6) the animal excrement process sheet according to any one of the above-mentioned (1) to (5), wherein a fiber density of a region in the top sheet which corresponds to a portion on a first surface side of the water preventing portion is lower than a fiber density of a region in the top sheet which corresponds to a portion on a second surface side of the water preventing portion.

In the present animal excrement process sheet, the fiber density of the region on the first surface side of the top sheet is designed to be lower than the fiber density of the region on the second surface side thereof. That is, in the region on the first surface side of the top sheet, the distance between the adjacent configuration fibers is wider. Accordingly, the capillary force in the region on the first surface side thereof is lower. As a result, it is possible to make it difficult for urine excreted from animals to spread inside the top sheet and to reach in the vicinity of the water preventing portion, and even when the urine reaches in the vicinity of the water preventing portion, by the lowering of the capillary force in the region on the first surface side and the hydrophobic agent, the leakage to the surface on the first surface side of the top sheet can be suppressed in a greater degree. Therefore, "the transmitting leakage" of urine can be suppressed in a greater degree.

The animal excrement process sheet according to the present invention may be (7) the animal excrement process sheet according to any one of the above-mentioned (1) to (5), wherein a fiber density of a region in the top sheet which corresponds to a portion on a second surface side of the water preventing portion is lower than a fiber density of a region in the top sheet which corresponds to a portion on a first surface side of the water preventing portion.

In the present animal excrement process sheet, the fiber density of the region on the second surface side of the top sheet is designed to be lower than the fiber density of the region on the first surface side thereof. That is, in the region on the second surface side of the top sheet, the distance between the adjacent configuration fibers is wider. Accordingly, the capillary force in the region on the second surface side thereof is lower. As a result, it is possible to make it difficult for urine excreted from animals to spread inside the top sheet and to reach in the vicinity of the water preventing portion, and even when the urine reaches in the vicinity of the water preventing portion, by the lowering of the capillary force in the region on the second surface side and the hydrophobic agent, the leakage to the outer side along between the top sheet and the back sheet can be suppressed in a greater degree. Therefore, "the bleeding leakage" of urine can be suppressed in a greater degree.

The animal excrement process sheet according to the present invention may be (8) the animal excrement process sheet according to any one of the above-mentioned (1) to (7), wherein the hydrophobic agent includes a water repellent agent.

In the present animal excrement process sheet, a water repellent agent is used as the hydrophobic agent, and by the water repellent agent, the movement of urine excreted by animals can be suppressed more reliably.

The animal excrement process sheet according to the present invention may be (9) the animal excrement process sheet according to the above-mentioned (8), wherein the water repellent agent includes at least one of a paraffin - based water repellent agent, a silicon - based water repellent agent, and a fluorine - based water repellent agent.

In the present animal excrement process sheet, a water repellent agent which includes at least one of a paraffin - based water repellent agent, a silicon - based water repellent agent, and a fluorine - based water repellent agent is used, and by the water repellent agent, the movement of urine excreted by animals can be suppressed more reliably.

The animal excrement process sheet according to the present invention may be (10) the animal excrement process sheet according to any one of the above-mentioned (1) to (9), wherein the top sheet includes an air -through nonwoven fabric in which bulk is recovered.

In the present animal excrement process sheet, an air -through nonwoven fabric in which bulk is recovered is used for the top sheet. The air -through nonwoven fabric in which bulk is recovered is bulky and has a low fiber density, and accordingly the fiber distance between the configuration fibers is relatively large. Therefore, it is possible to make it difficult for urine excreted from animals to move inside the top sheet so as to reach in the vicinity of the water preventing portion, by the lowering of the capillary force inside the top sheet, and even when the urine reaches in the vicinity of the water preventing portion, since the capillary force is low, it is even easier to suppress the movement of the urine by the hydrophobic agent.

[ADVANTAGEOUS EFFECTS OF INVENTION]

The animal excrement process sheet according to the present invention can provide an animal excrement process sheet which is capable of making it difficult for urine excreted by animals to leak to the outer side in the surface direction.

BRIEF DESCRIPTION OF DRAWINGS

FIG. 1 is a perspective view showing a configuration of an animal excrement process sheet according to an embodiment.
FIG. 2 is a plan view showing the configuration of the animal excrement process sheet according to the embodiment.
FIG. 3 is an enlarged plan view showing a configuration of an essential portion surrounded by the surrounding lines III of the animal excrement process sheet of FIG. 2.
FIG. 4 is a partial cross section view showing the configuration of the essential portion along the IV - IV line of the animal excrement process sheet of FIG. 2.
FIG. 5 is an enlarged cross section view showing the configuration of the essential portion surrounded by the surrounding lines V of the animal excrement process sheet of FIG. 4.
FIG. 6 is a plan view schematically showing a state after an animal excreted urine on the animal excrement process sheet of FIG. 2.
FIG. 7 is an enlarged plan view showing the configuration of the essential portion surrounded by the surrounding lines VII of the animal excrement process sheet of FIG. 6.

FIG. 8 is a schematic view showing a configuration of a manufacturing apparatus of the animal excrement process sheet according to the embodiment.

FIG. 9 is an enlarged cross section view showing another configuration of an essential portion surrounded by the surrounding lines V of the animal excrement process sheet of FIG. 4.

FIG. 10 is a schematic view showing another configuration of a manufacturing apparatus of the animal excrement process sheet according to the embodiment.

FIG. 11 is an enlarged cross section view showing still another configuration of an essential portion surrounded by the surrounding lines V of the animal excrement process sheet of FIG. 4.

FIG. 12 is a schematic view so as to explain the evaluation method of the liquid leakage prevention effect of the animal excrement process sheet according to the examples.

DESCRIPTION OF EMBODIMENTS

Hereinbelow, an embodiment of the animal excrement process sheet according to the present invention will be explained with reference to the drawings. In the present description, unless otherwise noted, "viewing an object (for example: the animal excrement process sheet, and the materials thereof) which is placed on a horizontal surface in an expanded state so that the supply surface of excrement faces upward, from an upper side in the vertical direction in the thickness direction of the object" is simply referred to as "in a plan view".

In the present description, the definition of each term is as follows. "The longitudinal direction" means "the longer direction in the length of a long animal excrement process sheet in a plan view". "The width direction" means "the shorter direction (the lateral direction) of a long animal excrement process sheet in a plan view". "The thickness direction" means "the vertical direction of the animal excrement process sheet which is placed on a horizontal surface in an expanded state". These longitudinal direction, width direction, and thickness direction are in a relationship of being mutually orthogonal to each other. Further, "the surface direction" means "the direction in which the plane of the substantially sheet - like animal excrement process sheet extends in a plan view (that is, the horizontal surface direction)". This surface direction and the thickness direction are in a relationship of being mutually orthogonal to each other. Further, "the virtual line which is positioned at the center in the first direction (for example: the longitudinal direction) of the animal excrement process sheet and extends in the second direction (for example: the width direction)" is referred to as "the central axis line $C_2$". Still further, "the virtual line which is positioned at the center in the second direction of the animal excrement process sheet and extends in the first direction which is orthogonal to the second direction" is referred to as "the central axis line $C_1$". Still further, "the relatively closer side with respect to the central axis line $C_2$, in the first direction (for example: the longitudinal direction) of the animal excrement process sheet" is referred to as "the inner side of the first direction", and "the farther side thereof" is referred to as "the outer side of the first direction". In the same manner, "the relatively closer side with respect to the central axis line $C_1$, in the second direction of the animal excrement process sheet" is referred to as "the inner side of the second direction", and "the farther side thereof" is referred to as "the outer side of the second direction". Further, "the relatively closer side with respect to the center of the animal excrement process sheet (the intersecting point of the central axis line $C_1$ which extends in the first direction and the central axis line $C_2$ which extends in the second direction), in the surface direction of the animal excrement process sheet" is referred to as "the inner side of the surface direction", and "the farther side thereof" is referred to as "the outer side of the surface direction". Still further, "the relatively closer side with respect to the supply surface of excrement in the thickness direction of the animal excrement process sheet" is referred to as "the supply surface side", and "the farther side thereof" is referred to as "the non - supply surface side". Still further, "the surface on the supply surface side of the animal excrement process sheet" is simply referred to as "the supply surface", and "the surface on the non - supply surface side" is simply referred to as "the non - supply surface". Since the non - supply surface side is also on the relatively closer side with respect to the placing surface on which the animal excrement process sheet is placed, "the non - supply surface side" may also be referred to as "the placing surface side". In the same manner, "the non - supply surface" may also be referred to as "the placing surface". Still further, these terms not only are used for the animal excrement process sheet, but also are shared for each material used in the animal excrement process sheet.

(The first embodiment)

The configuration of the animal excrement process sheet 1 according to the first embodiment is explained.

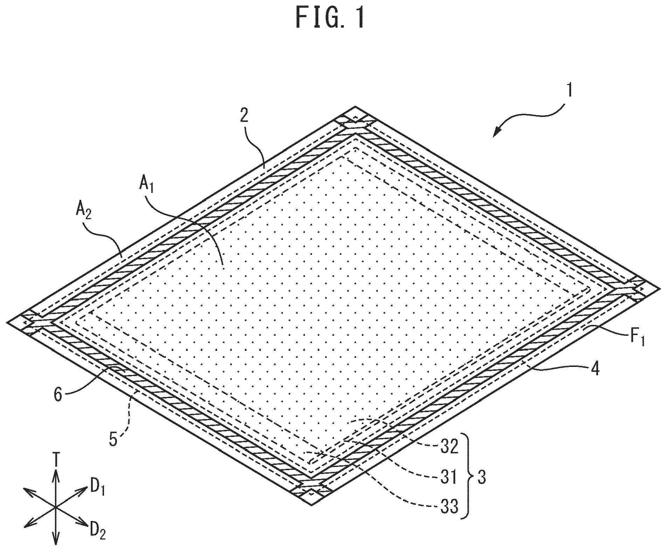

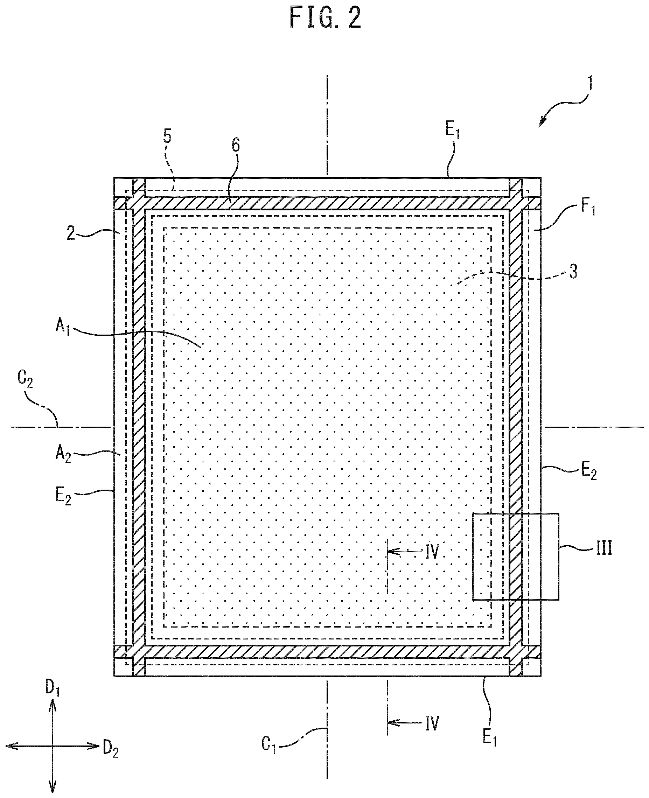

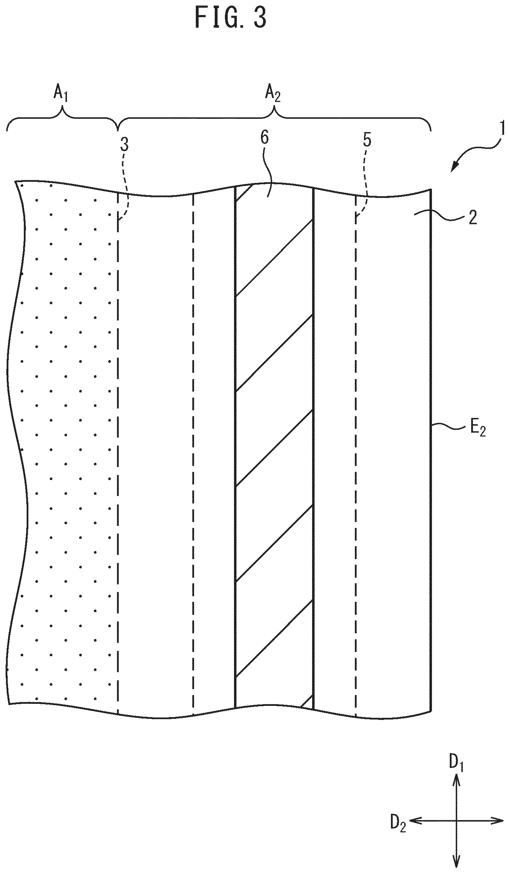

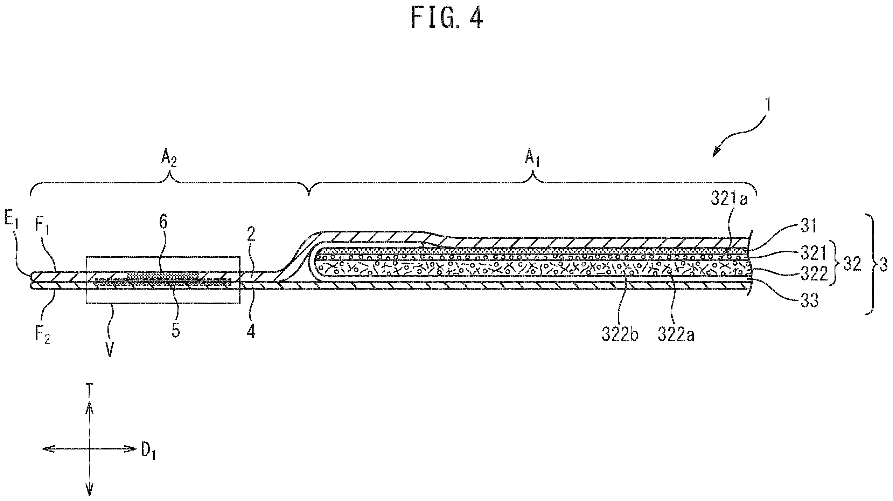

FIG. 1 is a perspective view which shows the configuration in a state in which the animal excrement process sheet 1 according to the embodiment is expanded. FIG. 2 is a plan view which shows the configuration in a state in which the animal excrement process sheet 1 is expanded viewed from the top sheet 2 side in the thickness direction. FIG. 3 is an enlarged plan view which shows the configuration of the essential portion surrounded by the surrounding lines III of the animal excrement process sheet 1 of FIG. 2. FIG. 4 is a partial cross section view which shows the configuration of the essential portion along the IV - IV line of the animal excrement process sheet 1 of FIG. 2.

The animal excrement process sheet 1 according to the present embodiment has the first direction $D_1$, the second direction $D_2$, and the thickness direction T which are mutually orthogonal to each other, and in a plan view, is configured by laminated sheets which have a long and substantially rectangular outer shape that is long in the first direction $D_1$. Incidentally, in the present invention, the outer shape of the animal excrement process sheet is not limited to such a substantially rectangular shape, and in accordance with various usages and designs, any outer shape such as a square, a polygon, a circle, an oval, a rounded rectangle, etc., may be adopted. Further, the outer dimension of the animal excrement process sheet 1 in a plan view may be suitably set in accordance with the size and type, etc., of animals to which the animal excrement process sheet 1 is applied. For example, in a case in which the applied animal is a dog, 400 mm to 1200 mm may be mentioned for the length in the first direction $D_1$ (the longitudinal direction), and 250 mm to 800 mm may be mentioned for the second direction $D_2$ (the width direction).

The animal excrement process sheet 1 includes, in the thickness direction T, the top sheet 2 which is formed by a liquid permeable sheet - like fiber structure body, the back sheet 4 which is formed by a liquid impermeable resin film, and the liquid absorbing absorbent body 3 which is arranged between these sheets. The top sheet 2 forms the first surface $F_1$ which is to be the supply surface of excrement discharged from animals. The back sheet 4 forms the second surface $F_2$ which is to be the placing surface on the opposite side of the supply surface (that is, the surface which faces the floor surface / ground on which the animal excrement process sheet 1 is placed). Further, the animal excrement process sheet 1 includes, in a plan view, the center portion $A_1$, and the outer periphery portion $A_2$. The center portion $A_1$, in a plan view, is positioned at the center of the animal excrement process sheet 1, and is partitioned as the portion in which the top sheet 2, the absorbent body 3, and the back sheet 4 are overlapped with each other in the thickness direction T. The outer periphery portion $A_2$, in a plan view, surrounds the center portion $A_1$, and extends from the outer edge of the center portion $A_1$ toward the outer edge of the animal excrement process sheet 1 (the outer edge being the first direction outer edges $E_1$ which are positioned on both ends in the first direction $D_1$ and the second direction outer edges $E_2$ which are positioned on both ends in the second direction $D_2$).

The animal excrement process sheet 1 further includes the water preventing portion 6 which includes a hydrophobic agent. (The hydrophobic agent of) the water preventing portion 6 extends, in the outer periphery portion $A_2$, so as to surround the center portion $A_1$, and is arranged in the thickness direction T from the surface on the first surface $F_1$ side of the back sheet 4 across the surface on the first surface $F_1$ side of the top sheet 2. In the present embodiment, the width of the water preventing portion 6 is, in a plan view, almost constant. For example, as shown in FIG. 2, the width of the water preventing portion 6 which extends along the first direction $D_1$ at both end portions in the second direction $D_2$, and the width of the water preventing portion 6 which extends along the second direction $D_2$ at both end portions in the first direction $D_1$, are almost constant. It should be noted however that in the present embodiment, the width being almost constant is referred to as the difference between the maximum value of the width and the minimum value of the width being 30 % of the maximum value of the width or less, and preferably being 20 % thereof or less. Note that the present invention is not limited to such an aspect, and the width of the water preventing portion 6 may be partially wide or narrow, and may be partially interrupted as long as the excreted urine cannot pass through. Further, the water preventing portion 6 according to the present embodiment is exposed so as not to protrude from the first surface $F_1$ of the animal excrement process sheet 1.

In the present embodiment, the animal excrement process sheet 1 further includes the joining portion 5. The joining portion 5 extends in the outer periphery portion $A_2$ so as to surround the center portion $A_1$, and joins the surface on the first surface $F_1$ side of the back sheet 4 and the surface on the second surface $F_2$ side of the top sheet 2. As the joining portion 5, the joining by any adhesive agent such as a hot melt type adhesive agent, and the joining by a heat fusion may be mentioned. In the present embodiment, the joining portion 5 is, in a plan view, wider than the water preventing portion 6, and overlaps with the entirety of the water preventing portion 6 with each other so as to include the water preventing portion 6. Note that the joining portion 5 may be, in a plan view, narrower than the water preventing portion 6, and may overlap with only a portion of the water preventing portion 6 with each other. Alternatively, the joining portion 5 and the water preventing portion 6 may, in a plan view, not overlap with each other, and one may be positioned on the inner side of the surface direction with respect to the other.

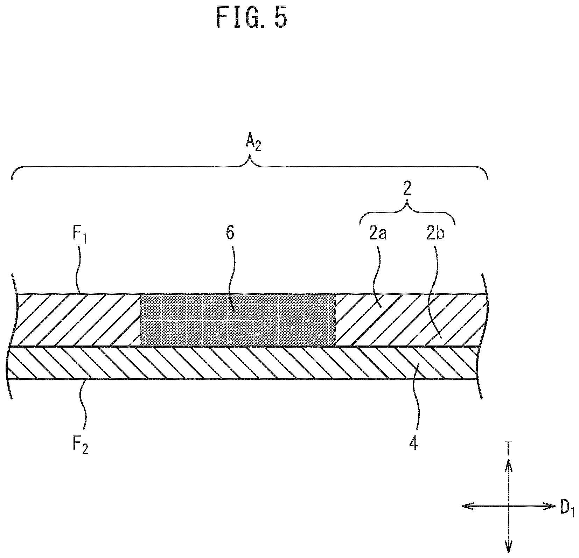

FIG. 5 is an enlarged cross section view which shows the configuration of the essential portion surrounded by the surrounding lines V of the animal excrement process sheet of FIG. 4. In this drawing, the joining portion 5 is omitted. As described above, the water preventing portion 6 includes a hydrophobic agent which is arranged in the thickness direction T from the surface on the first surface $F_1$ side of the back sheet 4 across the surface on the first surface $F_1$ side of the top sheet 2. That is, in the water preventing portion 6, the hydrophobic agent is arranged continuously in the thickness direction T between the surface on the first surface $F_1$ side of the back sheet 4 and the surface on the first surface $F_1$ side of the top sheet 2. In the present embodiment, the width of the hydrophobic agent in the direction vertical to the thickness direction T is almost the same from the region 2a on the first surface $F_1$ side of the top sheet 2 to the region 2b on the second surface $F_2$ side of the top sheet 2 in the water preventing portion 6. Note that the region 2a on the first surface $F_1$ side of the top sheet 2 is the half region on the first surface $F_1$ side in the thickness direction T of the top sheet 2, and the region 2b on the second surface $F_2$ side of the top sheet 2 is the half region on the second surface

$F_2$ side in the thickness direction T of the top sheet 2. Accordingly, the water preventing portion 6 surrounds the center portion $A_1$ with a wall - like hydrophobic agent which stands up in the thickness direction T from the surface on the first surface $F_1$ side of the back sheet 4. Note that the hydrophobic agent being a wall - like includes not only a case in which a hydrophobic agent forms a complete wall with no gaps, but also a case in which a gap or a void is partially present, or a portion in which the hydrophobic agent is partially interrupted is present, as long as excreted urine cannot pass through the water preventing portion 6. The excreted urine not being able to pass through the water preventing portion 6 does not require the amount of urine which passes through the water preventing portion 6 to be zero, and includes the amount of urine which passes therethrough being extremely small, and being within a predetermined acceptable range. As the acceptable range, for example, in a plan view, the amount which allows approximately 1 mm or less thereof to bleed per one hour in the direction vertical to the direction in which the water preventing portion 6 is arranged, may be mentioned. In the present embodiment, the width of the water preventing portion 6 which is parallel to the surface direction in the thickness direction T is almost constant, however, the present invention is not limited to such an aspect. That is, the width of the water preventing portion 6 may be partially wide or narrow, and may be partially interrupted as long as the excreted urine cannot pass through.

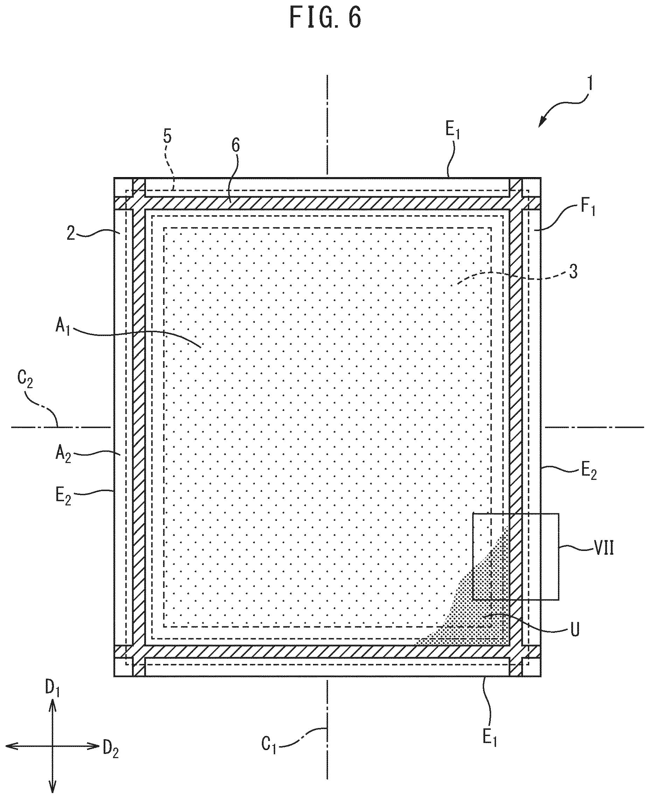

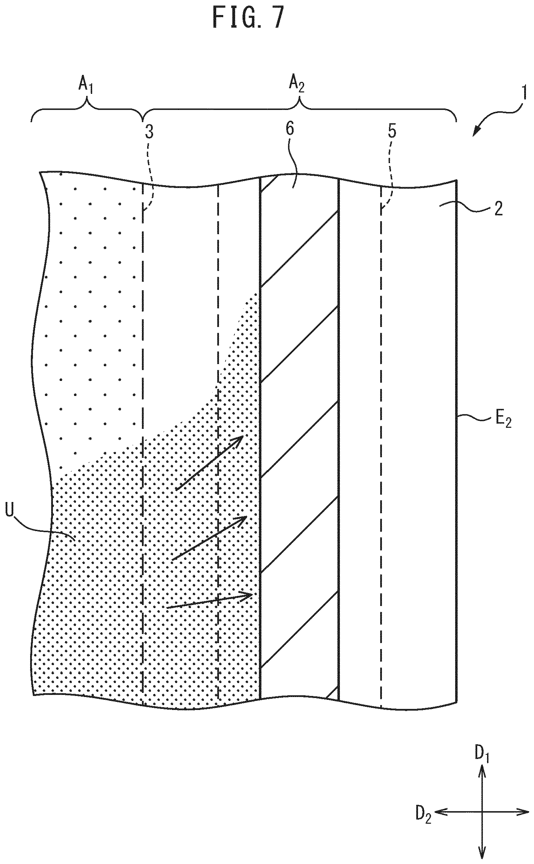

FIG. 6 is a plan view which schematically shows the state after an animal excreted urine U on the animal excrement process sheet 1 of FIG. 2. FIG. 7 is an enlarged plan view which shows the configuration of the essential portion surrounded by the surrounding lines VII of the animal excrement process sheet 1 of FIG. 6.

In this manner, in the animal excrement process sheet 1 according to the present embodiment, a hydrophobic agent of the water preventing portion 6 is arranged in the thickness direction T from the surface on the first surface $F_1$ side of the back sheet 4 across the surface on the first surface $F_1$ side of the top sheet 2, in the outer periphery portion $A_2$. Accordingly, as shown in FIG. 6 and FIG. 7, even when the urine U excreted from animals moves to the outer side in the surface direction along the surface (the first surface $F_1$) of the top sheet 2, by the hydrophobic agent which is arranged in the vicinity of the surface of the top sheet 2, such movement can be suppressed. Therefore, "the transmitting leakage" of the urine U can be suppressed. Further, the above-mentioned water preventing portion 6 is formed by a hydrophobic agent, whereby even when the animal excrement process sheet 1 is packed or is stepped on by animals, it is difficult for the water preventing action to be deteriorated, and the function as the water preventing portion 6 can be sufficiently exerted, whereby "the transmitting leakage" can be stably suppressed. Still further, even when the urine U excreted from animals moves to the outer side in the surface direction along the inside of the top sheet 2, by the hydrophobic agent which is arranged across the thickness direction T inside the top sheet 2, such movement can be suppressed. Accordingly, "the bleeding leakage" of the urine U can be suppressed. Therefore, according to the animal excrement process sheet 1 of the present embodiment, it is possible to make it difficult for the urine U excreted by animals to leak to the outer side in the surface direction.

The animal excrement process sheet 1 is placed in an expanded state at a predetermined position in a keeping space (for example: inside a room) of animals such as pets, so that the top sheet 2 is positioned on the supply surface side of excrement. Further, the animal excrement process sheet 1 absorbs and retains excrement when excrement such as urine, etc., is excreted from animals, and is used for maintaining the keeping space in a clean state. Further, the animal excrement process sheet 1 may be placed directly on a floor surface of a keeping space or an outside ground, or may be placed through a holder, a tray, or a bedding material, etc.

"The animals" to which the present animal excrement process sheet 1 is applied are not particularly limited as long as they are animals which can be kept as pets, etc., and can target various animals such as dogs, cats, hamsters, etc. Further, "excrement" which is the target for the present animal excrement process sheet 1 to absorb and retain is not limited to urine, and for example, includes various body fluids in a liquid state or with a low viscosity such as saliva such as drool, blood, and stool with a low viscosity, etc. Incidentally, in the present description, explanation is given with urine as the target for convenience.

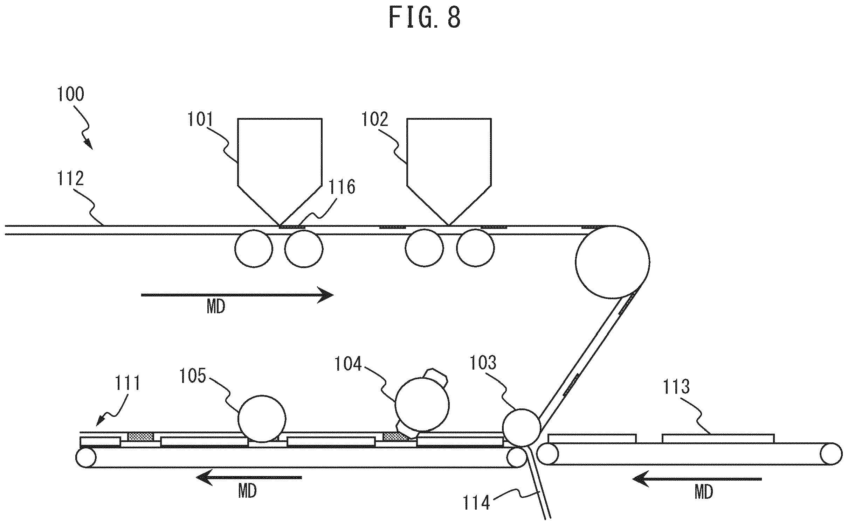

Next, the manufacturing method of the animal excrement process sheet 1 according to the first embodiment is explained. FIG. 8 is a schematic view which shows the configuration of the manufacturing apparatus 100 of the animal excrement process sheet 1 according to the embodiment. The manufacturing apparatus 100 includes the hydrophobic agent applying portion 101, the adhesive agent applying portion 102, the pressing roll 103, the transverse direction pressing roll 104, and the conveying direction pressing roll 105.

The continuous top sheet 112 is a sheet - like member for the top sheet 2, and has a shape in which the top sheets 2 are connected in the first direction $D_1$. Further, in the present manufacturing method, the continuous top sheet 112 is conveyed in the conveying direction MD by the conveying rolls so that the conveying direction MD and the transverse direction CD are parallel to the first direction $D_1$ and the second direction $D_2$, respectively. In the middle of conveying the continuous top sheet 112, while the hydrophobic agent applying portion 101 comes into contact with one surface of the continuous top sheet 112, the same applies the hydrophobic agent 116 at a predetermined portion of the one surface. The predetermined position to which the hydrophobic agent 116 is applied is the position which corresponds to the outer periphery portion $A_2$ of the top sheet 2 in the continuous top sheet 112. That is, the predetermined position is the position parallel to the conveying direction MD in the vicinity of the both outer edges of the transverse direction CD in the continuous top sheet 112, and the position parallel to the transverse direction CD separate in each of the predetermined intervals in the conveying direction MD. The hydrophobic agent 116 is applied to one surface of the continuous top sheet 112 and spreads to the inside thereof, however, does not always reaches the other surface.

Subsequently, in the present manufacturing method, the continuous top sheet 112 is further conveyed in the conveying direction MD by the conveying rolls. In the middle of conveying the continuous top sheet 112, while the adhesive agent applying portion 102 comes into contact with one surface of the continuous top sheet 112, the same applies an adhesive agent (which is not shown) at a predetermined portion of the one surface. The predetermined position to which the adhesive agent is applied is substantially the same as the predetermined position to which the hydrophobic agent 116 is applied, however, in the present embodiment, the adhesive agent is applied so as to be wider than the hydrophobic agent 116.

The continuous back sheet 114 is a sheet - like member for the back sheet 4, and has a shape in which the back sheets 4 are connected in the first direction $D_1$. The absorbent body 113 is an absorbent material for the absorbent body 3, and is substantially the absorbent body 3. Further, in the present manufacturing method, subsequently, the continuous back sheet 114 and the absorbent body 113 are conveyed in the conveying direction MD by the conveying rolls and the conveying belt, respectively, so that the conveying direction MD and the transverse direction CD are parallel to the first direction $D_1$ and the second direction $D_2$, respectively. Still further, the continuous top sheet 112 is conveyed in the conveying direction MD by the conveying rolls. Then, the continuous back sheet 114, the absorbent body 113, and the continuous top sheet 112 are laminated on the conveying belt in this order, and are pressed by the pressing roll 103. At this time, one surface of the continuous top sheet 112 to which the adhesive agent is applied comes into contact with the continuous back sheet 114, whereby the continuous top sheet 112 and the continuous back sheet 114 are joined to each other, so that a joining portion (which is not shown) is formed. Accordingly, the continuous process sheet in which the laminated bodies of the continuous back sheet 114, the absorbent body 113, and the continuous top sheet 112 are connected in the conveying direction MD (the first direction $D_1$) is formed.

Subsequently, among the predetermined position to which the hydrophobic agent 116 is applied in the continuous process sheet, the position which corresponds to the outer periphery portion $A_2$ of the top sheet 2 and is parallel to the transverse direction CD (the second direction $D_2$) is pressed by the transverse direction pressing roll 104. Further, among the predetermined position to which the hydrophobic agent 116 is applied in the continuous process sheet, the position which corresponds to the outer periphery portion $A_2$ of the top sheet 2 and is parallel to the conveying direction MD (the first direction $D_1$) is pressed by the conveying direction pressing roll 105. Incidentally, the order of the pressing by the transverse direction pressing roll 104 and the conveying direction pressing roll 105 may be reversed.

Accordingly, the hydrophobic agent 116 which is present in the vicinity of one surface of the continuous top sheet 112 (the surface on the continuous back sheet 114 side) can be spread to the other surface of the continuous top sheet 112 (the surface on the opposite side of the continuous back sheet 114). That is, the hydrophobic agent 116 can be spread to the entirety in the thickness direction T of the continuous top sheet 112. Accordingly, the hydrophobic agent 116 can be arranged in the thickness direction T from the surface on the continuous top sheet 112 side of the continuous back sheet 114 across the surface on the opposite side of the continuous back sheet 114 of the continuous top sheet 112.

In this manner, the continuous animal excrement process sheet 111 in which the animal excrement process sheets 1 are connected in the conveying direction MD (the first direction $D_1$) is formed. Thereafter, the same is cut in the transverse direction CD with the predetermined interval in the conveying direction MD, whereby the animal excrement process sheets 1 are continuously manufactured.

Hereinbelow, various members which configure the animal excrement process sheet according to the present invention are further explained by using the animal excrement process sheet 1 according to the present embodiment.

[The top sheet]

In the present embodiment, the top sheet 2 which is used for the animal excrement process sheet 1 has, as shown in FIG. 1 and FIG. 2, in a plan view, a long and substantially rectangular outer shape which is longer in the first direction $D_1$. Note that the first direction outer edges $E_1$ on both sides in the first direction $D_1$ of the animal excrement process sheet 1 are the shorter sides, and the second direction outer edges $E_2$ on both sides in the second direction $D_2$ are the longer sides. The top sheet 2 is arranged at the position which first receives urine excreted from animals in the thickness direction T (the position on the supply surface side), and is configured by a liquid permeable sheet - like member which makes the urine excreted from animals move from the supply surface to the absorbent body 3 which is positioned on the non - supply surface side (the placing surface side).

In the present invention, the liquid permeable sheet - like member which may be used as the top sheet is not particularly limited as long as it has a predetermined liquid permeability. As such a sheet member, for example, a sheet - like fiber structure body which is made of a nonwoven fabric such as an air -through nonwoven fabric, an SMS nonwoven fabric, a spun bond nonwoven fabric, a point bond nonwoven fabric, etc., a woven fabric, or a knitted fabric; a perforated film in which perforations are provided in a resin film, may be mentioned. The sheet - like fiber structure body may be subjected to a hydrophilic treatment by a surfactant. Among these, from the viewpoint of liquid permeability, strength, and softness, the sheet - like fiber structure body is preferable, and further from the viewpoint of the bulk recovery, an air -through nonwoven fabric is more preferable.

Further, in a case in which a sheet - like fiber structure body is used as the top sheet, the configuration fibers thereof are not particularly limited. As the configuration fibers, for example, thermoplastic resin fibers made of a resin such as an olefin based resin such as polyethylene and polypropylene, etc., a polyester based resin such as polyethylene terephthalate, and polylactic acid, etc., may be mentioned. These resins may be used alone, or two or more types of resins may be used in combination. Incidentally, the configuration of the thermoplastic resin fibers is not particularly limited, and for example, composite fibers such as core - sheath type fibers, modified cross - section type fibers, and three - dimensional crimped fibers, etc., may be mentioned.

Further, the thermoplastic resin fibers may be subjected to a hydrophilic treatment such as a treatment which uses for example, a surfactant or a hydrophilizing agent, etc., (for example : kneading a surfactant into fibers, applying a surfactant to the fiber surface). Further, the thermoplastic resin fibers may include any additives such as a pigment, fragrance, deodorizing agent, antibacterial agent, etc. Two or more types of such additives may be used in combination.

In the present invention, the basis weight of the sheet - like member which may be used as the top sheet is not particularly limited as long as the sheet - like member has a predetermined liquid permeability and strength. The basis weight may be for example, within the range of 6 g / m$^2$ to 30 g / m$^2$, and preferably within the range of 15 g / m$^2$ to 25 g / m$^2$. When the basis weight of the sheet - like member is within this range, the sheet - like member has a predetermined strength as the top sheet, whereby even when animals such as dogs step on the animal excrement process sheet, it is difficult for the same to be torn. Further, in a case in which the sheet - like member is formed by a fiber structure body, the distance between the configuration fibers is to be within the predetermined range, whereby in the top sheet, it is easier to make urine move from the supply surface side to the placing surface side. Still further, it is difficult for urine which has permeated through the top sheet and has been absorbed by the absorbent body to be seen by the dense structure of fibers in the top sheet.

In the present invention, the fiber density of the configuration fibers of the sheet - like member which may be used as the top sheet is not particularly limited as long as the sheet - like member has a predetermined liquid permeability and strength. The fiber density may be for example, within the range of 0.2 $\times$ 10$^{-2}$ g / cm$^3$ to 30 $\times$ 10$^{-2}$ g / cm$^3$, and more preferably within the range of 0.5 $\times$ 10$^{-2}$ g / cm$^3$ to 25 $\times$ 10$^{-2}$ g / cm$^3$. When the density of the configuration fibers of the sheet - like member is within such a range, it is easier to make urine move from the supply surface side to the placing surface side in the top sheet.

Especially, it is preferable that the density of the configuration fibers at the portion which corresponds at least to the water preventing portion 6 of the outer periphery portion A$_2$ in the sheet - like member is within the range of 20 $\times$ 10$^{-2}$ g / cm$^3$ or less, which is relatively low. When the density of the configuration fibers at the portion which corresponds to the water preventing portion 6 of the outer periphery portion A$_2$ in the sheet - like member is relatively low, the distance between the configuration fibers is relatively increased. Accordingly, with respect to the capillary force h which is shown by the following formula (1), the distance r between the configuration fibers is relatively increased, whereby the capillary force h is relatively decreased.

$$h = (2T\cos\theta) / \rho gr \qquad (1)$$

Note that in the formula (1), T: surface tension, $\theta$: contact angle, $\rho$: urine density, g: gravitational acceleration, r: distance between configuration fibers. Accordingly, the capillary force h can be suppressed in a relatively lower degree in the water preventing portion 6, whereby the spreading of urine of animals from the center portion A$_1$ toward the water preventing portion 6 of the outer periphery portion A$_2$ is suppressed in a relatively lower degree, whereby the water preventing action of the water preventing portion 6 can be assisted. Accordingly, the water preventing portion 6 can exert the water preventing action in a more effective manner. Incidentally, the movement of urine from the supply surface side to the placing surface side is the spreading of urine in the thickness direction T of the sheet - like member, which has a short movement distance, whereby the same is hardly influenced by the above-mentioned decrease of the capillary force.

In the present embodiment, an air -through nonwoven fabric in which bulk is recovered is used as the sheet - like member of the top sheet 2. That is, an air -through nonwoven fabric may be made to pass through a heated atmosphere or to be blown with hot air, etc., whereby the bulk can be recovered. Since an air -through nonwoven fabric in which bulk is recovered is bulky (thick), the fiber density is low, and accordingly, the distance between the configuration fibers is relatively large. Therefore, even when the capillary force h inside the top sheet obtained from the above-mentioned formula (1) is decreased, and urine excreted from animals moves to the inside of the top sheet, it is possible to make it difficult for the urine to reach in the vicinity of the water preventing portion, and even when the urine reaches the same, since the capillary force is small, the movement of the urine can be easily suppressed by the hydrophobic agent in a greater degree. In this manner, it is possible for the air -through nonwoven fabric to spread the distance between the configuration fibers extremely easily by the treatment of bulk recovery, which is preferable.

Further, the structure of the top sheet is not particularly limited as long as it has a predetermined liquid permeability which may be used as the top sheet, and those which have a substantially flat structure as in the present embodiment, or those which have a protruded and recessed structure in the surface on the supply surface side of excrement may be preferably used. Especially, a top sheet which has a protruded and recessed structure in the surface on the supply surface side of excrement is excellent in the liquid permeability to make urine permeate therethrough in the thickness direction, and it is difficult for urine to move along the surface of such a top sheet. Accordingly, a top sheet which has a protruded and recessed structure can make urine which is supplied to the first surface of the animal excrement process sheet move quickly to the absorbent body, and further, it is possible to make it even more difficult for the leakage of urine to the outer side in the surface direction to occur.

Incidentally, the shape of a protruded and recessed structure of the top sheet is not particularly limited as long as it promotes the movement of liquid such as urine. As the shape of a protruded and recessed structure, for example, a protruded and recessed structure which includes, in a plan view, a plurality of linear protruded portions that extend in a predetermined direction of a top sheet, and are arranged with a predetermined interval in a direction orthogonal to the predetermined direction, and a plurality of linear recessed portions which are positioned between the adjacent protruded portions, and extend parallel to the protruded portions, may be mentioned. Note that the inner portion structure of the protruded portions may be hollow or solid. As another shape of a protruded and recessed structure, for example, a protruded and recessed structure in which a plurality of hemispherical or cylindrical protruded portions are arranged on a substantially flat base portion, may be mentioned. As still another shape of a protruded and recessed structure, for example, a protruded and recessed structure in which protruded portions and recessed portions are irregularly formed in the substantially entire surface on the supply surface side of the top sheet, may be mentioned. The means to form these protruded and recessed structures are not particularly limited, and for example, any shaping method such as a method of blowing gas (for example: air) on fiber web, a compression molding method, a gear stretching method, etc., may be adopted.

Further, the dimensional shape, thickness, etc., of the sheet - like member which may be used as the top sheet is not particularly limited as long as such a sheet - like member can function as a top sheet of an animal excrement process sheet, and any dimensional shape, thickness, etc., in accordance with the desired liquid permeability and strength, etc., may be adopted.

[The absorbent body]

In the present embodiment, the absorbent body 3 which is used for the animal excrement process sheet 1 has, as shown in FIG. 2, in a plan view, a square outer shape. The square extends across the central axis line $C_2$ extending in the second direction of the animal excrement process sheet 1, in the first direction $D_1$, and extends across the central axis line $C_1$ extending in the first direction $D_1$, in the second direction $D_2$. The absorbent body 3 is arranged between the top sheet 2 and the back sheet 4 in the thickness direction T of the animal excrement process sheet 1, and is configured by an absorbent member which absorbs and retains urine which has permeated through the top sheet 2. The top sheet 2 and the absorbent body 3 are joined by any adhesive agent (which is not shown) such as a hot melt adhesive agent, etc. Such an adhesive agent is arranged between the top sheet 2 and the absorbent body 3 with a basis weight that does not prevent the permeability of excrement (for example: 0.1 g / m$^2$ to 10 g / m$^2$) and an applying manner (for example: a film state (a curtain coating), a spiral state, a dot state, a stripe state).

The absorbent body 3 has, in a plan view, an outer dimension which is one size smaller than the top sheet 2 and the back sheet 4, and is arranged at the center region of the animal excrement process sheet 1. Accordingly, the animal excrement process sheet 1, in a plan view, is partitioned into the center portion $A_1$ which is the portion in which the top sheet 2, the absorbent body 3, and the back sheet 4 overlap with each other in the thickness direction T, and the outer periphery portion $A_2$ which surrounds the center portion $A_1$, and extends from the outer edge of the center portion $A_1$ toward the outer edge of the animal excrement process sheet 1.

The absorbent body 3 includes, as shown in FIG. 4, the hydrophilic colored sheet 31, the absorbent core 32, and the core wrap sheet 33. The colored sheet 31 is positioned on the relatively supply surface side in the thickness direction T, and is colored with any color such as blue, green, yellow, orange, etc. The absorbent core 32 is positioned on the relatively non - supply surface side in the thickness direction T, and is formed by absorbent materials so as to absorb and retain excrement. The core wrap sheet 33 covers these colored sheet 31 and absorbent core 32 from the non - supply surface side, and is formed by at least one sheet of liquid permeable sheet. Further, the absorbent core 32 includes, as shown in FIG. 4, the first absorbent core 321 and the second absorbent core 322. The first absorbent core 321 is positioned on the relatively supply surface side in the thickness direction T, and is configured by the absorbent polymers 321a. The second absorbent core 322 is positioned on the relatively non - supply surface side in the thickness direction T, and is configured by the absorbent polymers 322a and the absorbent fibers 322b.

The first absorbent core 321, as shown in FIG. 4, is configured by the granular absorbent polymers 321a which are arranged in a state of being dispersed in a plane between the above-mentioned colored sheet 31 and second absorbent core 322. The second absorbent core 322 is configured by the mixture of the granular absorbent polymers 322a and the absorbent fibers 322b which are arranged in a state of being dispersed in a plane between the above-mentioned first absorbent core 321 and core wrap sheet 33.

The absorbent polymers 321a which configures the first absorbent core 321 and the absorbent polymers 322a which configures the second absorbent core 322 may be the same absorbent polymers or different absorbent polymers. These absorbent polymers are not particularly limited as long as they can absorb and retain excrement such as urine, and for example, any absorbent polymer of such as polyacrylic acid based (for example: sodium acrylate copolymer), starch based, cellulose based, etc., may be adopted. The basis weight of the absorbent polymers is not particularly limited, however, from the viewpoint of absorbance, etc., the basis weight of the absorbent polymers 321a is preferably within the range of 20 g / m$^2$ to 50 g / m$^2$, and the basis weight of the absorbent polymers 322a is preferably within the range of 8 g / m$^2$ to 30 g / m$^2$.

The absorbent fibers which are included in the second absorbent core 322 are not particularly limited as long as they can absorb and retain excrement such as urine, and for example, cellulose based absorbent fibers such as pulp such as fluff pulp, etc., or cotton may be used. The basis weight of the absorbent fibers is not particularly limited, however, from the viewpoint of absorbance, etc., the basis weight thereof is preferably within the range of 30 g / m$^2$ to 115 g / m$^2$.

In the animal excrement process sheet 1 according to the present embodiment, the absorbent core 32 of the absorbent body 3 is configured by the above-mentioned first absorbent core 321 and second absorbent core 322. Accordingly, it is easy for the urine which has permeated through the top sheet 2 to pass through between the absorbent polymers 321a of the first absorbent core 321 so as to be drawn to the second absorbent core 322 by the affinity of the absorbent fibers 322b which are included in the second absorbent core 322. Therefore, the animal excrement process sheet 1 can make the urine which has permeated through the top sheet 2 be absorbed quickly by the absorbent body 3, whereby it is difficult for the urine to flow to the outer side in the surface direction of the animal excrement process sheet 1, and it is possible to make it even more difficult for the leakage of urine to the outer side in the surface direction to occur. Further, according to the animal excrement process sheet 1 of the present embodiment, when animals steps on the first surface F$_1$, even when urine which has been retained between the absorbent fibers 322b which are included in the second absorbent core 322 bleeds out by the pressure received from the feet of the animals, it is possible to make it difficult for the bled out urine to bleed out from the animal excrement process sheet 1. The reason is that the bled out urine can be absorbed by the absorbent polymers 322a which are included in the second absorbent core 322 and the absorbent polymers 321a of the first absorbent core 321 which are positioned on the supply surface side of the second absorbent core 322.

Further, in the animal excrement process sheet 1 according to the present first embodiment, the absorbent body 3 includes the absorbent polymers 321a of the first absorbent core 321 and the absorbent polymers 322a and the absorbent fibers 322b of the second absorbent core 322 as the absorbent materials. Accordingly, the absorbent body as a whole has a large water retention amount, and can reliably absorb and retain excrement such as urine, etc., for a long period of time.

Incidentally, in the present invention, the absorbent members which may be used as the absorbent body are not limited to those of the aspect of the present embodiment as long as they can absorb and retain excrement such as urine, etc., and any absorbent member known in the technical field may be used. Further, the absorbent members may be those with a two - layer structure which includes two layers of absorbent cores as in the present embodiment, or those with a single layer structure which includes a single layer of an absorbent core, or those with a multi - layer structure which includes three layers or more of absorbent cores.

In the present embodiment, the colored sheet 31 is configured by tissue paper which is colored with any color such as blue, green, yellow, orange, etc., and as shown in FIG. 4, is arranged so as to cover the surface on the supply surface side (the top sheet side) of the absorbent core 32 in the absorbent body 3. Note that as the tissue paper, for example, one which is formed from conifer bleached kraft pulp as the main raw material with a basis weight of approximately 13.5 g / m$^2$, may be mentioned. The colored sheet 31 prevents the shape of the absorbent core 32 from being lost in cooperation with the core wrap sheet 33, and can make the color of urine absorbed by the absorbent core 32 be inconspicuous by being mixed with the color of the colored sheet 31 (that is, it is possible to make it difficult for excrement absorbed by the absorbent body 3 to be seen from the supply surface side).

In the present embodiment, the entire sheet of the colored sheet 31 is colored with any color, however, the present invention is not limited to such an aspect, and the colored sheet may be partially colored. Further, the coloring manner of the colored sheet is also not particularly limited, and the colored sheet may be colored with a single color or with a plurality of colors, and may be colored in any manner with patterns or characters, etc., of a predetermined color. Such a colored sheet may be obtained, for example, by coloring a base sheet before being colored (for example: tissue paper, nonwoven fabric such as an air -through nonwoven fabric, etc.) by using any coloring means such as dyeing and printing, etc.

In the present embodiment, the core wrap sheet 33 is configured by tissue paper similar to the above-mentioned colored sheet 31 (for example: tissue paper, etc., which is formed from conifer bleached kraft pulp as the main raw material with a basis weight of 13.0 g / m$^2$ to 13.5 g / m$^2$). The core wrap sheet 33, as shown in FIG. 4, is arranged so as to cover the colored sheet 31 and the absorbent core 32 on the non - supply surface side (the back sheet side) of the absorbent core 32 in the absorbent body 3. By including such a core wrap sheet 33, it is difficult for the loss of shape of the absorbent core 32 and the position shifting of the colored sheet 31 to occur in the animal excrement process sheet 1. In the present invention, the core wrap sheet is not particularly limited as long as it has a liquid permeability and can prevent the shape of an absorbent core from being lost, etc., and other than the above-mentioned tissue paper, for example, any nonwoven fabric such as an air -through nonwoven fabric, a spunbond nonwoven fabric, etc., may be used.

In the present embodiment, the absorbent body 3 has, as shown in FIG. 1 and FIG. 2, a square outer shape in a plan view, however, in the present invention, the outer shape is not limited to such an aspect, and the absorbent body may have, for example, any plan view shape other than a square, for example, circle, oval, etc. Further, in the present invention, the position at which the absorbent body is arranged is also not particularly limited as long as the animal excrement process sheet can be partitioned into the above-mentioned center portion and outer periphery portion, and the absorbent body, in a plan view, may be arranged so as to be shifted to a certain degree in any direction with respect to the center of the animal excrement process sheet.

Incidentally, the outer dimension, the thickness, the basis weight, etc., of the absorbent member which may be used as the absorbent body are not particularly limited as long as the absorbent member can function as the absorbent body of the animal excrement process sheet. As these outer dimension, thickness, basis weight, etc., any outer dimension, thickness, basis weight, etc., in accordance with the size and type, etc., of animals to which the animal excrement process sheet 1 is applied may be adopted.

[The back sheet]

In the present embodiment, the back sheet 4 which is used for the animal excrement process sheet 1 has, in a plan view, a long and substantially rectangular outer shape which is longer in the first direction $D_1$. Note that the first direction outer edges $E_1$ on both sides in the first direction $D_1$ of the animal excrement process sheet 1 are the shorter sides, and the second direction outer edges $E_2$ on both sides in the second direction $D_2$ are the longer sides. The back sheet 4 is arranged at the position which faces the floor surface / ground on which the animal excrement process sheet 1 is placed (that is, the position on the non - supply surface side) in the thickness direction T of the animal excrement process sheet 1. The back sheet 4 is configured by a liquid impermeable sheet - like member which functions so as to prevent the urine absorbed and retained by the animal excrement process sheet 1 from leaking.

In the present invention, the liquid impermeable sheet - like member which may be used as the back sheet is not particularly limited as long as it has a predetermined liquid impermeability. As such a sheet - like member, for example, a resin film which is formed by polyethylene, polypropylene, polyethylene terephthalate, etc., a laminated body in which such a resin film and nonwoven fabric are adhered to each other, a water repellent or hydrophobic nonwoven fabric in which various resin films are laminated, etc., may be mentioned. As the laminated resin film, for example, a laminated film of polyethylene / polypropylene, may be mentioned.

Further, the basis weight of the sheet - like member which may be used as the back sheet is not particularly limited as long as the sheet - like member has a predetermined liquid impermeability and strength, and for example, the basis weight may be for example, within the range of 5 g / m$^2$ to 30 g / m$^2$, and preferably within the range of 15 g / m$^2$ to 20 g / m$^2$.

Further, the back sheet has an outer shape and dimension which can cover the absorbent body on the non - supply surface side, in the same manner as the above-mentioned top sheet, and in the present embodiment, the back sheet 4 has, in a plan view, substantially the same outer shape and dimension as the top sheet 2. Incidentally, the dimensional shape, thickness, etc., of the sheet - like member which may be used as the back sheet is not particularly limited as long as such a sheet - like member can function as a back sheet of an animal excrement process sheet, and any dimensional shape, thickness, etc., in accordance with the desired liquid impermeability and strength, etc., may be adopted.

[The joining portion]

The animal excrement process sheet 1 according to the present embodiment includes, as shown in FIG.1 to FIG. 4, in the outer periphery portion $A_2$, the joining portion 5 which extends so as to surround the center portion $A_1$ and in which the top sheet 2 and the back sheet 4 are joined through any adhesive agent such as a hot melt type adhesive agent, etc. In the joining portion 5, an adhesive agent infiltrates to a certain degree in the thickness direction at least from the surface on the non - supply surface side of the top sheet 2, and is fixed in a state of entering between the configuration fibers of the top sheet 2. Accordingly, while sufficiently securing the joining strength of the top sheet 2 and the back sheet 4, the bleeding leakage in which urine which is excreted on the supply surface and urine which has leaked out from the absorbent body leaks to the outer side in the surface direction along the inside of the top sheet 2 can be suppressed, and it is possible to make it difficult for urine to leak to the outer side in the surface direction of the animal excrement process sheet 1.

In the present invention, the applying amount and applying manner of the adhesive agent which is used for the joining portion are not particularly limited as long as they do not inhibit the effect of the present invention, and any applying amount and applying manner may be adopted. As the applying amount, for example, 0.1 g / $m^2$ to 10 g / $m^2$ may be mentioned. As the applying manner, for example, a manner in which an adhesive agent is applied in a single or a plurality of linear state, strip state, spiral state, omega state, zigzag state, etc., may be mentioned.

Incidentally, as another embodiment, the joining portion 5 may be configured by a fused portion in which the configuration fibers of the fiber structure body which configures the top sheet 2 and the back sheet 4 are fused with each other in a melted state. In such a case, it is preferable that the joining portion 5 is formed, in a plan view, on the outer side or the inner side in the surface direction with respect to the water preventing portion 6, so as not to overlap with the water preventing portion 6.

[The water preventing portion]

The animal excrement process sheet 1 according to the present embodiment includes the water preventing portion 6 which extends so as to surround the center portion $A_1$ in the outer periphery portion $A_2$, and includes a hydrophobic agent which is arranged in the thickness direction T from the surface on the first surface $F_1$ side of the back sheet 4 across the surface on the first surface $F_1$ of the top sheet 2.

By including the water preventing portion 6, according to the animal excrement process sheet 1, as shown in FIG. 6 and FIG. 7, even when the excreted urine U moves to the outer side in the surface direction along the surface (the first surface $F_1$) of the top sheet 2, by the hydrophobic agent which is arranged in the vicinity of the surface of the top sheet 2, such movement can be suppressed. Therefore, "the transmitting leakage" of the urine U can be suppressed. Further, the above-mentioned water preventing portion 6 is formed by a hydrophobic agent, whereby even when the animal excrement process sheet 1 is packed or is stepped on by animals, it is difficult for the water preventing action to be deteriorated, and the function as the water preventing portion 6 can be sufficiently exerted, whereby "the transmitting leakage" can be stably suppressed. Still further, even when the urine U excreted from animals moves to the outer side in the surface direction along the inside of the top sheet 2, by the hydrophobic agent which is arranged across the thickness direction T inside the top sheet 2, such movement can be suppressed. Accordingly, "the bleeding leakage" of the urine U can be suppressed.

In the present invention, the hydrophobic agent which forms the water preventing portion of the animal excrement process sheet is not particularly limited as long as it is an agent with a hydrophobic property, and can form a portion with a hydrophobic action on a sheet member, and for example, a water repellent agent and a lipophilic agent (an agent with a lipophilic property) may be mentioned. As the water repellent agent, a paraffin - based water repellent agent, a silicon - based water repellent agent, a fluorine - based water repellent agent, or a combination of at least two water repellent agents among the aforementioned, may be mentioned. As the lipophilic agent, a triglyceride - based lipophilic agent, a wax - based lipophilic agent, a vinyl acetate - based lipophilic agent, or a combination of at least two lipophilic agents among the aforementioned, may be mentioned. As the wax - based lipophilic agent, for example, an urethane resin wax, an acrylic resin wax may be mentioned, and as the vinyl acetate - based lipophilic agent, ethylene vinyl acetate copolymer (EVA), polyvinyl acetate (PVAc) may be mentioned. Further, the hydrophobic agent may be used by combining a water repellent agent and a lipophilic agent. Especially, in a case in which the hydrophobic agent includes a water repellent agent (including a case in which a water repellent agent is 100 %), the animal excrement process sheet can suppress the movement of urine excreted from animals more reliably by the water repellent agent of the water preventing portion 6, which is preferable.

In the present embodiment, the water preventing portion 6, as shown in FIG. 5, surrounds the center portion $A_1$ in the thickness direction T in a substantially wall state, however, the present invention is not limited to such an aspect. For example, in a case in which the top sheet 2 is configured by a sheet - like fiber structure body, the hydrophobic agent of the water preventing portion 6 is made to cover at least the surface of the configuration fibers of the fiber structure body. In such a case, in the region in which the water preventing portion 6 is formed, it is not necessary for the hydrophobic material to cover the surface of the entire configuration fibers in the region as long as the excreted urine cannot pass therethrough, and has only to cover the surface of a portion of the configuration fibers. In such a case, it is not necessary for the hydrophobic material to cover the entire surface of each of the configuration fibers of the portion in the region, and has only to cover a portion of the surface. At this time, it is not necessary for the void between the entire configuration fibers in the region to be filled. Accordingly, even when urine excreted from animals moves to the outer side in the surface direction along the surface or the inside of the top sheet, by the hydrophobic agent which is arranged on the surface of the configuration fibers, such movement can be suppressed in a greater degree. As the ratio of the configuration fibers covered by the hydrophobic agent, for example, 70 % or more of the entire configuration fibers in the region of the water preventing portion 6 may be mentioned, preferably 80 % or more may be mentioned, and more preferably 90 % or more may be mentioned. Alternatively, as the ratio of the surface area of the configuration fibers covered by the hydrophobic agent, for example, 70 % or more of the entire surface area of the entire configuration fibers in the region of the water preventing portion 6 may be mentioned, preferably 80 % or more may be mentioned, and more preferably 90 % or more may be mentioned.

Alternatively, for example, the hydrophobic agent of the water preventing portion 6 is filled at least in the void between the configuration fibers of the fiber structure body. In such a case, in the region in which the water preventing portion 6 is formed, it is not necessary for the hydrophobic material to be filled in the void between the entire configuration fibers in the region as long as the excreted urine cannot pass therethrough, and has only to be filled in the void between a portion of the configuration fibers. At this time, it is not necessary that the surface of the entire configuration fibers in the region to be covered. As the ratio of the void between the configuration fibers which is filled with the hydrophobic agent, for example, 70 % or more of the entire voids in the region of the water preventing portion 6 may be mentioned, preferably 80 % or more may be mentioned, and more preferably 90 % or more may be mentioned.

Alternatively, the water preventing portion 6 may be a combination of both of the aforementioned. That is, the hydrophobic agent of the water preventing portion 6 may cover a portion or the entirety of the surface of a portion or the entirety of the configuration fibers, and may be filled in a portion or the entirety of the voids between the configuration fibers.

In the present invention, the applying amount, etc., of the hydrophobic agent is not particularly limited as long as the water preventing portion which is formed by the hydrophobic agent can function as the water preventing portion of the animal excrement process sheet, and any applying amount, etc., may be adopted. Further, the hydrophobic agent may include any added components such as a pigment, fragrance, etc., as long as they do not inhibit the effect of the present invention. For example, when the hydrophobic agent includes a pigment such as a red food coloring, etc., the colored water preventing portion which is formed by the hydrophobic agent can be easily seen visually even before urine is supplied to the animal excrement process sheet. Accordingly, when a keeper of animals sees the water preventing portion which is formed by the hydrophobic agent, the animal excrement process sheet which includes the water preventing portion can give the keeper a secured feeling that it is difficult for the animal excrement process sheet to leak the urine outside.

In the present embodiment, the portion of the water preventing portion 6, as shown in FIG. 2, which overlaps with the above-mentioned joining portion 5 in the thickness direction T extends so as to surround the center portion $A_1$, however, the present invention is not limited to such an aspect. For example, depending on the habits of animals for which the animal excrement process sheet of the present invention is applied, and the arrangement manner of the animal excrement process sheet (for example: a manner in which the animal excrement process sheet is arranged on a floor surface along the wall surface, etc.), there may be cases that a portion in which it is difficult for urine of animals to leak to the outer side in the surface direction is present. In such a case, the water preventing portion 6 may not be arranged in such a portion, and may be arranged only in the portion in which urine may leak out to the outer side in the surface direction.

In the present embodiment, the water preventing portion 6, as shown in FIG. 2, is arranged continuously so as to surround the absorbent body 3 along the outer edge of the animal excrement process sheet 1, in the outer side in the surface direction of the absorbent body 3 which is positioned in the center portion $A_1$ of the animal excrement process sheet 1 (the outer periphery portion $A_2$). That is, the water preventing portion 6 is arranged continuously so as to surround the absorbent body 3 along the first direction outer edges $E_1$ which are positioned on both ends in the first direction $D_1$, and the second direction outer edges $E_2$ which are positioned on both ends in the second direction $D_2$, in the outer periphery portion $A_2$. Note that, in the present invention, the arrangement manner of the water preventing portion is not limited to the aspect of the present embodiment as long as the water preventing portion can exert the water preventing action, and the water preventing portion may be arranged in any manner. The water preventing portion is preferably arranged so as to overlap with the absorbent body at least in one direction among the first direction and the second direction. In such a case, the water preventing portion, and the joining portion which overlaps with the water preventing portion in the thickness direction overlap with the absorbent body at least in one direction among the first direction and the second direction, whereby it is easy to suppress the transmitting leakage of urine excreted in the center portion of the animal excrement process sheet, and it is also easy to suppress the bleeding leakage of urine which has leaked out from the absorbent body. Note that the water preventing portion overlapping with the absorbent body in the predetermined one direction (for example: the first direction) means, in a plan view, when the outer shape of the absorbent body is projected in the predetermined one direction, the water preventing portion is present within the range of the projected absorbent body. In other words, the same means that the water preventing portion is present between two virtual straight lines in which both edges of the other direction (for example: the second direction) orthogonal to the predetermined one direction of the outer shape of the absorbent body are extended in the predetermined one direction.

Further, when the water preventing portion extends continuously along at least one direction among the first direction and the second direction, the flow channel of urine which flows in the direction which intersects the extending direction of the water preventing portion (that is, the direction which crosses the water preventing portion) can be shut off. Accordingly, it is possible to make it difficult for the leakage of urine to the outer side in the surface direction of the animal excrement process sheet to occur in a greater degree.

In the present invention, the water preventing portion may further include, other than the portion which includes the hydrophobic agent, or alternatively, in a state of being overlapped with such a portion, a fused portion and / or a compressed portion. The fused portion and / or the compressed portion may for example be arranged on the inner side and / or the outer side in the surface direction with respect to the water preventing portion. The fused portion is a portion in which the top sheet and the back sheet are fused in the thickness direction, in the outer periphery portion of the animal excrement process sheet. The fused portion may be formed for example by a heat fusion means such as heat sealer, etc., or an ultrasonic fusion means, etc. The compressed portion is a portion in which the top sheet and the back sheet are compressed in the thickness direction, in the outer periphery portion of the animal excrement process sheet. The compressed portion may be formed by any compression process means such as embossing process, etc. When the water preventing portion further includes such a fused portion or the compressed portion, in the water preventing portion, it is even more difficult for a gap which may be the flow channel of urine to be formed from the supply surface of the top sheet to the non - supply surface of the back sheet. Accordingly, the water preventing portion can shut off the flow channel of urine which flows to the outer side in the surface direction of the animal excrement process sheet more reliably. Further, when the water preventing portion further includes the fused portion or the compressed portion, the top sheet and the back sheet can be joined with a higher joining strength. Accordingly, it is more difficult for the top sheet and the back sheet to be separated, and it is possible to make it difficult for urine which has leaked out from the absorbent body to leak out from the animal excrement process sheet over a long period of time.

In the present embodiment, the water preventing portion 6, in a plan view, is arranged in a manner in which a linear water preventing portion extending in the first direction $D_1$ and a linear water preventing portion extending in the second direction $D_2$ are combined in a cross. Note that in the present invention, the arrangement manner of the water preventing portion is not particularly limited as long as it does not inhibit the effect of the present invention. The water preventing portion may be arranged for example, in a manner of a linear state, a wavy state, a zigzag state, or a dashed state, which extends at least in one direction of the first direction and the second direction, or may be arranged in a manner in which the aforementioned manners are arbitrarily combined. As such a manner, for example, in a plan view, a manner of a crossed state which surrounds the absorbent body, a square state, an L - shaped state, or with parallel lines, etc., or in a manner with multiple lines aligned in the direction orthogonal to the direction in which the water preventing portion extends, may be mentioned.


(The second embodiment)

The configuration of the animal excrement process sheet 1 according to the second embodiment is explained. The animal excrement process sheet 1 of the second embodiment is different from the animal excrement process sheet 1 of the first embodiment, in the configuration of the water preventing portion. Accordingly, hereinbelow, the configuration which differs from that of the first embodiment is mainly explained, and the explanation of the other configurations is omitted.

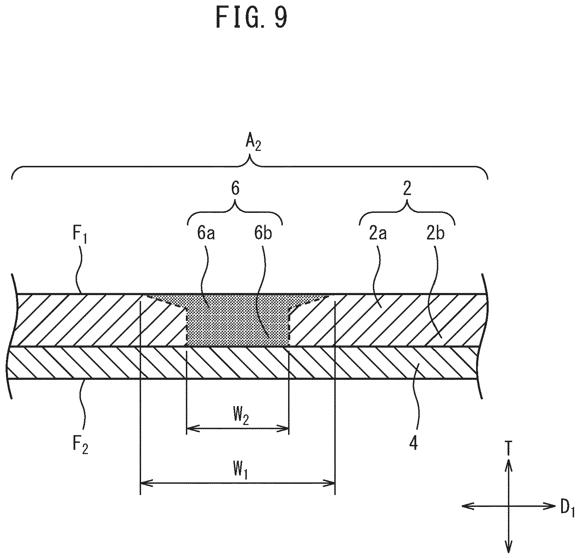

FIG. 9 is an enlarged cross section view which shows another configuration of the essential portion surrounded by the surrounding lines V of the animal excrement process sheet of FIG. 4. In the water preventing portion 6 according to the present embodiment, the width $W_1$ of the portion 6a which corresponds to the region 2a on the first surface $F_1$ side of the top sheet 2 in the water preventing portion 6 is wider than the width $W_2$ of the portion 6b which corresponds to the region 2b on the second surface $F_2$ side of the top sheet 2 in the water preventing portion 6. The portion 6a which corresponds to the region 2a on the first surface $F_1$ side of the top sheet 2 is the portion which includes the hydrophobic agent that is present in the half region 2a on the first surface $F_1$ side in the thickness direction T of the top sheet 2. The portion 6b which corresponds to the region 2b on the second surface $F_2$ side of the top sheet 2 is the portion which includes the hydrophobic agent that is present in the half region 2b on the second surface $F_2$ side in the thickness direction T of the top sheet 2.

Accordingly, the present animal excrement process sheet 1 can demonstrate the same effect as the first embodiment, and can also demonstrate the following effect. That is, even when urine excreted from animals moves along the inside of the top sheet 2 and reaches in the vicinity of the water preventing portion 6, the leakage to the surface on the first surface $F_1$ side of the top sheet 2 can be suppressed in a greater degree by the portion 6a of the water preventing portion 6. Therefore, "the transmitting leakage" of urine can be suppressed in a greater degree.

The width $W_1$ of the portion 6a being wider than the width $W_2$ of the portion 6b in the thickness direction T means that the maximum value of the width $W_1$ of the portion 6a is larger than the maximum value of the width $W_2$ of the portion 6b. The position in the thickness direction T of the maximum value of the width $W_1$ of the portion 6a is not particularly limited, however, from the viewpoint of suppressing "the transmitting leakage" in a greater degree, the same is preferably the range of at least 50 % or less on the first surface $F_1$ side, in the thickness of the portion 6a, the same is more preferably the range of 20 % or less, and is even more preferably the range of 10 % or less. Further, the thickness in the thickness direction T at which the width $W_1$ of the portion 6a is to be the maximum value is not particularly limited, however, from the viewpoint of suppressing "the transmitting leakage" in a greater degree, the same is preferably the range of 50 % or less in the thickness of the portion 6a, the same is more preferably the range of 20 % or less, and is even more preferably the range of 10 % or less.

Further, it is not necessary for the entire region of the water preventing portion 6 which surrounds the center portion $A_1$ to have the aspect of the present embodiment (FIG. 9), and when at least a portion of the region has such an aspect, the above-mentioned effect can be demonstrated in the region.

Next, the manufacturing method of the animal excrement process sheet 1 according to the second embodiment is explained. The manufacturing method of the animal excrement process sheet 1 according to the second embodiment is different from the manufacturing method of the animal excrement process sheet 1 according to the first embodiment, in the forming method of the water preventing portion. Accordingly, the configuration which differs from that of the first embodiment is mainly explained, and the explanation of other configurations is omitted.

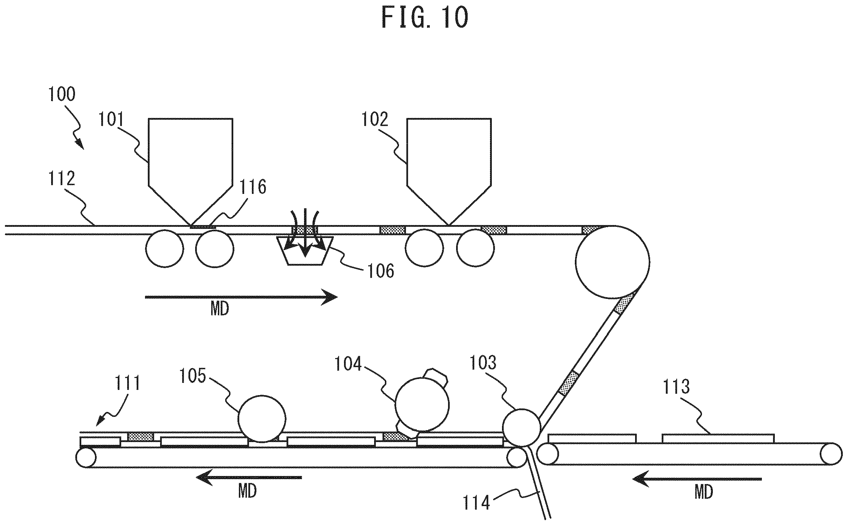

FIG. 10 is a schematic view which shows the configuration of the manufacturing apparatus 100 of the animal excrement process sheet 1 according to the embodiment. The manufacturing apparatus 100 includes the hydrophobic agent applying portion 101, the adhesive agent applying portion 102, the pressing roll 103, the transverse direction pressing roll 104, the conveying direction pressing roll 105, and the suction portion 106.

In the present manufacturing method, in the same manner as the process in the first embodiment, the continuous top sheet 112 on which the hydrophobic agent 116 is applied at the predetermined position on one surface is conveyed in the conveying direction MD by the conveying rolls. Subsequently, in the middle of conveying the continuous top sheet 112, the suction portion 106 sucks the other surface of the continuous top sheet 112. Accordingly, the hydrophobic agent 116 which is present mainly on one surface of the continuous top sheet 112 is sucked toward the other surface. Further, the hydrophobic agent 116 is made to move from one surface of the continuous top sheet 112 so as to reach the other surface, and is spread in the conveying direction MD and the transverse direction CD by the suction. As a result, the width of the portion which corresponds to the region on the other surface (the surface to which the hydrophobic agent is not applied) side of the continuous top sheet 112 in the hydrophobic agent 116 is to be wider than the width of the portion which corresponds to the region on the one surface (the surface to which the hydrophobic agent is applied) side of the continuous top sheet 112 in the hydrophobic agent 116. Incidentally, the one surface of the continuous top sheet 112 is the surface which is joined to the absorbent body 113 and the continuous back sheet 114. Subsequently, the same process as the first embodiment is performed.

(The third embodiment)

The configuration of the animal excrement process sheet 1 according to the third embodiment is explained. The animal excrement process sheet 1 of the third embodiment is different from the animal excrement process sheet 1 of the second embodiment, in the configuration of the water preventing portion. Accordingly, hereinbelow, the configuration which differs from that of the second embodiment is mainly explained, and the explanation of the other configurations is omitted.

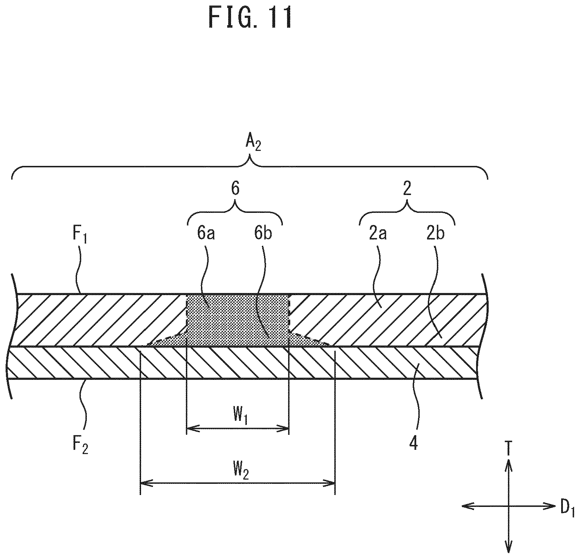

FIG. 11 is an enlarged cross section view which shows still another configuration of the essential portion surrounded by the surrounding lines V of the animal excrement process sheet of FIG. 4. In the water preventing portion 6 according to the present embodiment, the width $W_2$ of the portion 6b which corresponds to the region 2b on the second surface $F_2$ side of the top sheet 2 in the water preventing portion 6 is wider than the width $W_1$ of the portion 6a which corresponds to the region 2a on the first surface $F_1$ side of the top sheet 2 in the water preventing portion 6.

Accordingly, the present animal excrement process sheet 1 can demonstrate the same effect as the first embodiment, and can also demonstrate the following effect. That is, even when urine excreted from animals moves along the inside of the top sheet 2 and reaches in the vicinity of the water preventing portion 6, the leakage to the surface on the second surface side $F_2$ of the top sheet 2, that is, the leakage to the outer side along between the top sheet 2 and the back sheet 3, can be suppressed in a greater degree by the portion 6b of the water preventing portion 6. Therefore, "the bleeding leakage" of urine can be suppressed in a greater degree.

The width $W_2$ of the portion 6b being wider than the width $W_1$ of the portion 6a in the thickness direction T means that the maximum value of the width $W_2$ of the portion 6b is larger than the maximum value of the width $W_1$ of the portion 6a. The position in the thickness direction T of the maximum value of the width $W_2$ of the portion 6b is not particularly limited, however, from the viewpoint of suppressing "the bleeding leakage" in a greater degree, the same is preferably the range of at least 50 % or less on the second surface $F_2$ side, in the thickness of the portion 6b, the same is more preferably the range of 20 % or less, and is even more preferably the range of 10 % or less. Further, the thickness in the thickness direction T at which the width $W_2$ of the portion 6b is to be the maximum value is not particularly limited, however, from the viewpoint of suppressing "the bleeding leakage" in a greater degree, the same is preferably the range of 50 % or less in the thickness of the portion 6b, the same is more preferably the range of 20 % or less, and is even more preferably the range of 10 % or less.

Further, it is not necessary for the entire region of the water preventing portion 6 which surrounds the center portion $A_1$ to have the aspect of the present embodiment (FIG. 11), and when at least a portion of the region has such an aspect, the above-mentioned effect can be demonstrated in the region.

Next, the manufacturing method of the animal excrement process sheet 1 according to the third embodiment is explained. The manufacturing method of the animal excrement process sheet 1 according to the third embodiment is different from the manufacturing method of the animal excrement process sheet 1 according to the second embodiment, in the forming method of the water preventing portion. Accordingly, the configuration which differs from that of the second embodiment is mainly explained, and the explanation of other configurations is omitted.

In comparison with the manufacturing apparatus 100 of the second embodiment described in FIG. 10, the manufacturing apparatus (which is not shown) of the animal excrement process sheet 1 according to the present embodiment differs from the same in the following points. That is, in the present manufacturing apparatus, the hydrophobic agent applying portion 101 is arranged on the other surface side of the continuous top sheet 112, and the suction portion 106 is arranged on the one surface side of the continuous top sheet 112.

In the present manufacturing method, in the middle of conveying the continuous top sheet 112, the hydrophobic agent applying portion 101, while coming into contact with the other surface of the continuous top sheet 112, applies the hydrophobic agent 116 at a predetermined position on the other surface. Subsequently, in the middle of conveying the continuous top sheet 112, the suction portion 106 sucks the one surface of the continuous top sheet 112. Accordingly, the hydrophobic agent 116 which is present mainly on the other surface of the continuous top sheet 112 is sucked toward the one surface. Further, the hydrophobic agent 116 is made to move from the other surface of the continuous top sheet 112 so as to reach the one surface, and is spread in the conveying direction MD and the transverse direction CD by the suction. As a result, the width of the portion which corresponds to the region on the one surface (the surface to which the hydrophobic agent is not applied) side of the continuous top sheet 112 in the hydrophobic agent 116 is to be wider than the width of the portion which corresponds to the region on the other surface (the surface to which the hydrophobic agent is applied) side of the continuous top sheet 112 in the hydrophobic agent 116. The one surface of the continuous top sheet 112 is the surface which is joined to the absorbent body 113 and the continuous back sheet 114. Subsequently, the same process as the second embodiment is performed.

(The fourth embodiment)

The configuration of the animal excrement process sheet 1 according to the fourth embodiment is explained. The animal excrement process sheet 1 of the fourth embodiment is different from the animal excrement process sheet 1 of the first embodiment, in the configuration of the water preventing portion. Accordingly, hereinbelow, the configuration which differs from that of the first embodiment is mainly explained, and the explanation of the other configurations is omitted.

In the present embodiment, in FIG. 5, the fiber density of the region 2a which corresponds to the portion 6a on the first surface $F_1$ side of the water preventing portion 6 in the top sheet 2 is lower than the fiber density of the region 2b which corresponds to the portion 6b on the second surface $F_2$ side of the water preventing portion 6 in the top sheet 2.

Accordingly, the present animal excrement process sheet 1 can demonstrate the same effect as the first embodiment, and can also demonstrate the following effect. That is, in the region 2a on the first surface side $F_1$ of the top sheet 2, the distance between the adjacent configuration fibers is wider. Accordingly, the capillary force in the region 2a on the first surface $F_1$ side thereof is relatively lower. As a result, it is possible to make it difficult for urine excreted from animals to spread inside the top sheet 2 and to reach in the vicinity of the water preventing portion 6. Further, even when the excreted urine reaches in the vicinity of the water preventing portion 6, by the lowering of the capillary force in the region 2a on the first surface $F_1$ side and the hydrophobic agent, the leakage to the surface on the first surface $F_1$ side of the top sheet 2 can be suppressed in a greater degree. Therefore, "the transmitting leakage" of urine can be suppressed in a greater degree.

The fiber density of the region 2a being lower than the fiber density of the region 2b in the top sheet 2 means that the minimum value of the fiber density of the region 2a is smaller than the minimum value of the fiber density of the region 2b. The position in the thickness direction T of the minimum value of the fiber density of the region 2a is not particularly limited, however, from the viewpoint of suppressing "the transmitting leakage" in a greater degree, the same is preferably the range of at least 50 % or less on the first surface $F_1$ side, in the thickness of the region 2a, the same is more preferably the range of 20 % or less, and is even more preferably the range of 10 % or less. Further, the thickness in the thickness direction T at which the fiber density of the region 2a is to be the minimum value is not particularly limited, however, from the viewpoint of suppressing "the transmitting leakage" in a greater degree, the same is preferably the range of 50 % or less in the thickness of the region 2a, the same is more preferably the range of 20 % or less, and is even more preferably the range of 10 % or less.

Further, it is not necessary for the entire region of the top sheet 2 to have the aspect of the present embodiment, and when the region of the outer periphery portion $A_2$ has such an aspect, the above-mentioned effect can be demonstrated in the region. Still further, it is not necessary for the entire region of the outer periphery portion $A_2$ to have the aspect of the present embodiment, and when at least a portion of the region has such an aspect, the above-mentioned effect can be demonstrated in the region.

Next, the manufacturing method of the animal excrement process sheet 1 according to the fourth embodiment is explained. The manufacturing method of the animal excrement process sheet 1 according to the fourth embodiment is different from the manufacturing method of the animal excrement process sheet 1 according to the first embodiment, in the forming method of the water preventing portion. Accordingly, the configuration which differs from that of the first embodiment is mainly explained, and the explanation of other configurations is omitted.

In comparison with the manufacturing apparatus 100 of the first embodiment described in FIG. 8, the manufacturing apparatus (which is not shown) of the animal excrement process sheet 1 according to the present embodiment differs from the same in the following points. That is, in the present manufacturing apparatus, the bulk recovery device (which is not shown) which heats the other surface of the continuous top sheet 112 so as to make the region on the other surface side of the continuous top sheet 112 recover the bulk is arranged prior to the hydrophobic agent applying portion 101.

In the present manufacturing method, while the continuous top sheet 112 is conveyed in the conveying direction MD by the conveying rolls, the other surface is heated by the bulk recovery device (which is not shown). By the other surface being heated, the region on the other surface side of the continuous top sheet 112 (which corresponds to the region 2a) recovers the bulk, and the thickness thereof is to be thicker. On the other hand, since the one surface of the continuous top sheet 112 is not heated, the region on the one surface side of the continuous top sheet 112 (which corresponds to the region 2b) hardly recovers the bulk, and the thickness thereof hardly changes. Subsequently, the same process as the first embodiment is performed.

(The fifth embodiment)

The configuration of the animal excrement process sheet 1 according to the fifth embodiment is explained. The animal excrement process sheet 1 of the fifth embodiment is different from the animal excrement process sheet 1 of the first embodiment, in the configuration of the water preventing portion. Accordingly, hereinbelow, the configuration which differs from that of the first embodiment is mainly explained, and the explanation of the other configurations is omitted.

In the present embodiment, in FIG. 5, the fiber density of the region 2b which corresponds to the portion 6b on the second surface $F_2$ side of the water preventing portion 6 in the top sheet 2 is lower than the fiber density of the region 2a which corresponds to the portion 6a on the first surface $F_1$ side of the water preventing portion 6 in the top sheet 2.

Accordingly, the present animal excrement process sheet 1 can demonstrate the same effect as the first embodiment, and can also demonstrate the following effect. That is, in the region 2b on the second surface $F_2$ side of the top sheet 2, the distance between the adjacent configuration fibers is wider. Accordingly, the capillary force in the region 2b on the second surface $F_2$ side thereof is lower. As a result, it is possible to make it difficult for urine excreted from animals to spread inside the top sheet 2 and to reach in the vicinity of the water preventing portion 6. Further, even when the excreted urine reaches in the vicinity of the water preventing portion 6, by the lowering of the capillary force in the region 2b on the second surface $F_2$ side and the hydrophobic agent, the leakage to the outer side along between the top sheet 2 and the back sheet 4 can be suppressed in a greater degree. Therefore, "the bleeding leakage" of urine can be suppressed in a greater degree.

The fiber density of the region 2b being lower than the fiber density of the region 2a in the top sheet 2 means that the minimum value of the fiber density of the region 2b is smaller than the minimum value of the fiber density of the region 2a. The position in the thickness direction T of the minimum value of the fiber density of the region 2b is not particularly limited, however, from the viewpoint of suppressing "the bleeding leakage" in a greater degree, the same is preferably the range of at least 50 % or less on the second surface $F_2$ side, in the thickness of the region 2b, the same is more preferably the range of 20 % or less, and is even more preferably the range of 10 % or less. Further, the thickness in the thickness direction T at which the fiber density of the region 2b is to be the minimum value is not particularly limited, however, from the viewpoint of suppressing "the bleeding leakage" in a greater degree, the same is preferably the range of 50 % or less in the thickness of the region 2b, the same is more preferably the range of 20 % or less, and is even more preferably the range of 10 % or less.

Further, it is not necessary for the entire region of the top sheet 2 to have the aspect of the present embodiment, and when the region of the outer periphery portion $A_2$ has such an aspect, the above-mentioned effect can be demonstrated in the region. Still further, it is not necessary for the entire region of the outer periphery portion $A_2$ to have the aspect of the present embodiment, and when at least a portion of the region has such an aspect, the above-mentioned effect can be demonstrated in the region.

Next, the manufacturing method of the animal excrement process sheet 1 according to the fifth embodiment is explained. The manufacturing method of the animal excrement process sheet 1 according to the fifth embodiment is different from the manufacturing method of the animal excrement process sheet 1 according to the first embodiment, in the forming method of the water preventing portion. Accordingly, the configuration which differs from that of the first embodiment is mainly explained, and the explanation of other configurations is omitted.

In comparison with the manufacturing apparatus 100 of the first embodiment described in FIG. 8, the manufacturing apparatus (which is not shown) of the animal excrement process sheet 1 according to the present embodiment differs from the same in the following points. That is, in the present manufacturing apparatus, the bulk recovery device (which is not shown) which heats the one surface of the continuous top sheet 112 so as to make the region on the one surface side of the continuous top sheet 112 recover the bulk is arranged prior to the hydrophobic agent applying portion 101.

In the present manufacturing method, while the continuous top sheet 112 for the top sheet 2 is conveyed in the conveying direction MD by the conveying rolls, the one surface is heated by the bulk recovery device (which is not shown). By the one surface being heated, the region on the one surface side of the continuous top sheet 112 (which corresponds to the region 2b) recovers the bulk, and the thickness thereof is to be thicker. On the other hand, since the other surface thereof is not heated, the region on the other surface side of the continuous top sheet 112 (which corresponds to the region 2a) hardly recovers the bulk, and the thickness thereof hardly changes. Thereafter, while the continuous top sheet 112 is being conveyed in the conveying direction MD by the conveying rolls, the hydrophobic agent 116 is applied to the one surface of the continuous top sheet 112 by the hydrophobic agent applying portion 101. Subsequently, the same process as the first embodiment is performed.

<The basis weight, the thickness, and the fiber density of the sheet - like member>

(1) The basis weight of the sheet - like member: the sheet - like member is cut out into a size of 5 cm $\times$ 5 cm and set as a sample, and the mass thereof is measured after being subjected to a dry treatment at an atmosphere of 100 °C or higher. The measured mass is divided by the area of the sample, so as to calculate the basis weight of the sample. The average value of the basis weights of 10 samples is regarded as the basis weight of the sheet - like member.

(2) The thickness of the sheet - like member: by using a thickness gauge with a 15 cm$^2$ probe (FS - 60DS manufactured by Daiei Kagaku Seiki MFG, Co., Ltd.), the thickness of the sheet - like member is measured under the condition of 3 g / cm$^2$ of measurement load. The thickness at three portions are measured in one sample, and the average value of the thicknesses at three portions is regarded as the thickness of the sheet - like member.

(3) The fiber density of the sheet - like member: the fiber density of the sheet - like member is calculated by dividing the basis weight of the sheet - like member obtained by the above-mentioned method by the thickness of the sheet - like member obtained by the above-mentioned method.

<The local fiber density in the sheet - like member>

The region which includes the measurement target portion in the sheet - like member is cut by a sharp blade (for example: a cutter knife). Subsequently, by using a scanning - type electron microscope (for example: VE - 7800 manufactured by Keyence Corporation), the cut surface of the measurement target portion in the cut sheet - like member is enlarged with the midpoint in the thickness direction of the measurement target portion being set as the center of observation (for example: 100 to 1000 times magnification), and is photographed. Subsequently, the number of cut surfaces of the fibers per certain area (for example: 1 mm $\times$ 0.25 mm$^t$) of the photographed cut surface is counted. Then, the counted number of the cut surfaces of the fibers is converted to the number of cut surfaces of the fibers per 1 mm$^2$, and the converted number is regarded as the fiber density (the number / mm$^2$) of the measurement target portion. Note that the measurement of the fiber density is performed at three portions, and the average value thereof is regarded as the fiber density.

<The width of the hydrophobic agent in the sheet - like member>

The width of the hydrophobic agent which is exposed to the top surface and the back surface in the sheet - like member is measured in the following manner. A colored hydrophobic agent is applied onto the sheet - like member in the same manner as the normal hydrophobic agent. Subsequently, the width of the colored hydrophobic agent which is exposed to the top surface and the back surface in the sheet - like member is measured by a ruler. Note that the measurement of the width is performed at three portions, and the average value thereof is regarded as the width of the hydrophobic agent of the top surface and the back surface in the sheet - like member.

The width of the hydrophobic agent in the thickness direction of the sheet - like member is measured in the following manner. A colored hydrophobic agent is applied onto the sheet - like member in the same manner as the normal hydrophobic agent. Subsequently, the region which includes the colored hydrophobic agent in the sheet - like member (the region which includes the measurement target portion) is cut by a sharp blade (for example: a cutter knife). Subsequently, by using an optical microscope, the cut surface of the measurement target portion in the cut sheet - like member is enlarged with the midpoint in the thickness direction of the measurement target portion being set as the center of observation (for example: 10 to 100 times magnification), and is photographed. Subsequently, the width of the colored region in the photographed cut surface is measured. Note that the measurement of the width is performed at three portions, and the average value thereof is regarded as the width of the hydrophobic agent in the thickness direction of the sheet - like member.

EXAMPLES

Hereinbelow, the animal excrement process sheet 1 of the present invention is further explained in detail based on examples, however, the scope of the present invention is not limited to these examples.

(1) Preparation of samples

The animal excrement process sheets were manufactured by using the manufacturing method of the first embodiment. Note that for each of the sample, the top sheet and the hydrophobic agent were selected in the following manner.

(a) Example 1: An air -through nonwoven fabric with a basis weight of 22 gsm and a thickness of 0.80 mm was used as the top sheet. A paraffin - based water repellent agent (TH - 44: manufactured by Nicca Chemical Co., Ltd.; including solid paraffin, cationic based polymer, butyl cellosolve, isopropyl alcohol, and water as components) being diluted by 25 times with water is used with a basis weight of 20 gsm as the hydrophobic agent of the water preventing portion.

(b) Example 2: The sample was prepared in the same manner as Example 1 except for the thickness of the top sheet (the air -through nonwoven fabric of Example 1) being 1.10 mm by the bulk recovery by hot air.

(c) Comparative example 1: The sample was prepared in the same manner as Example 1 except for the water preventing portion (the hydrophobic agent) not being formed.

(d) Comparative example 2: The sample was prepared in the same manner as Example 1 except for the hydrophobic agent of the water preventing portion being formed only on substantially the surface of the top sheet.

(e) Example 3: The sample was prepared in the same manner as Example 1 except for the top sheet being a point bond nonwoven fabric with a basis weight of 17 gsm and a thickness of 0.15.

(f) Comparative example 3: The sample was prepared in the same manner as Example 3 except for the water preventing portion (the hydrophobic agent) not being formed.

(g) Example 4: The sample was prepared in the same manner as Example 1 except for a silicon - based water repellent agent (manufactured by Nicca Chemical Co., Ltd.; including silicone, silica, nonionic surfactant, cationic surfactant, and water as components) was used as the hydrophobic agent of the water preventing portion.

(h) Example 5: The sample was prepared in the same manner as Example 1 except for triglyceride (Panasate: manufactured by NOF corporation; including medium-chain fatty acid triglyceride as a component) was used as the hydrophobic agent of the water preventing portion.

(i) Example 6: The sample was prepared in the same manner as Example 1 except for wax (manufactured by Rinrei wax, Co., Ltd.; including urethane resin, acrylic resin, and water as components) was used as the hydrophobic agent of the water preventing portion.

(j) Example 7: The sample was prepared in the same manner as Example 1 except for EVA (Ethylene - Vinyl Acetate) (manufactured by AkzoNobel N.V.; including ethyl vinyl acetate polymer as a component) was used as the hydrophobic agent of the water preventing portion.

(2) The evaluation method of the samples

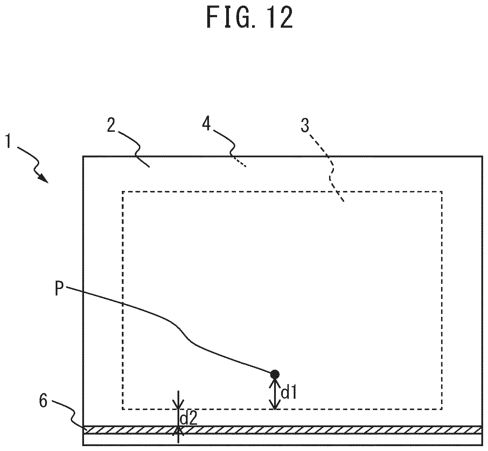

The samples of Examples 1 to 7 were evaluated by the following method. FIG. 12 is a schematic view so as to explain the evaluation method of the liquid leakage prevention effect of the animal excrement process sheet according to the examples.

(i) Each sample was in a dried state. The dried state was obtained by storing each sample for 24 hours or more in a standard state (temperature of 23 $\pm$ 2 °C, relative humidity of 50 $\pm$ 5 %).

(ii) Subsequently, artificial urine was dropped with a dropping speed of 330 ml / min from a dropping device (which is not shown) a point P which has the distance d1 to the inner side based on the edge of the absorbent body 3. Further, the moment at which the artificial urine moved the distance d1 so as to reach the edge of the absorbent body 3, further moved the distance d2 from the edge of the absorbent body 3 so as to reach one edge of the water preventing portion 6 (the hydrophobic agent), and further got over the other edge of the water preventing portion 6, the dropping of the artificial urine was stopped. Note that d1 = 25 mm, and d2 = 10 mm.

(iii) The dropping amount of the artificial urine was calculated from the amount of artificial urine remaining in the dropping device, and the dropping amount (ml) was regarded as the capacity of leakage prevention, that is, the water preventing effect. Further, the dropping amount of 30 ml or more was evaluated as having a preferable water preventing effect (the dropping amount was more preferably 40 ml or more, and was even more preferably 50 ml or more).

Further, the samples of Comparative examples 1 to 3 were also evaluated by the same method as the samples of the Examples.

(3) The evaluation results of the samples

The evaluation results of each sample are shown in Table 1 and Table 2.

In Table 1, from the comparison of Example 1 and Comparative examples 1 and 2, and the comparison of Example 3 and Comparative example 3, it can be understood that in comparison with a case in which the water preventing portion is not present or a case in which the water preventing portion is present only in the top surface, an extremely high water preventing effect can be obtained by the water preventing portion according to the present invention. It is conceived that this is because the hydrophobic agent is arranged in the thickness direction T from the surface on the first surface $F_1$ side of the back sheet 4 across the surface on the first surface $F_1$ side of the top sheet 2. Further, from the comparison of Example 1 and Example 2, when the basis weight is the same, extremely high water preventing effect can be obtained when the bulk is higher (the thickness is thicker). It is conceived that this is because when the bulk is higher, that is, the fiber density is lower, the distance between the fibers are increased, and as a result, the capillary force is lowered, in addition to the effect of the hydrophobic agent.

In Table 2, it can be understood that although the hydrophobic agents have a water preventing effect, there is a slight difference in the water preventing effect depending on the type thereof. That is, it can be understood that a so-called water repellent agent (for example: a paraffin - based water repellent agent, a silicon - based water repellent agent) has a greater water preventing effect than a lipophilic agent (for example: triglyceride, wax, EVA). It is conceived that this is caused by the characteristics of the hydrophobic agent itself, and the compatibility with the sheet member of the top sheet 2.

[Table 1]

| | Nonwoven fabric | Basis weight (gsm) | Thickness (mm) | Hydrophobic agent | | Water preventing effect (ml) |
| --- | --- | --- | --- | --- | --- | --- |
| | | | | Type | Basis weight (gsm) | |
| Example 1 | Air-through | 22 | 0.80 | Paraffin-based water repellent agent | 20 | 55.6 |
| Example 2 | Air-through | 22 | 1.10 | Paraffin-based water repellent agent | 20 | 133.0 |
| Comparative example 1 | Air through | 22 | 0.80 | - | - | 17.3 |
| Comparative example 2 | Air-through | 22 | 0.80 | Paraffin-based water repellent agent | 15 (Top surface) | 24.0 |
| Example 3 | Point bond | 17 | 0.15 | Paraffin-based water repellent agent | 20 | 60.8 |
| Comparative example 3 | Point bond | 17 | 0.15 | - | - | 22.7 |

[Table 2]

| | Nonwoven fabric | Basis weight (gsm) | Thickness (mm) | Hydrophobic agent | | Water preventing effect (ml) |
|---|---|---|---|---|---|---|
| | | | | Type | Basis weight (gsm) | |
| Example 1 | Air-through | 22 | 0.80 | Paraffin-based water repellent agent | 20 | 55.6 |
| Example 4 | Air-through | 22 | 0.80 | Silicon-based water repellent agent | 20 | 57.0 |
| Example 5 | Air-through | 22 | 0.80 | Triglyceride | 20 | 51.7 |
| Example 6 | Air-through | 22 | 0.80 | Wax | 20 | 44.3 |
| Example 7 | Air-through | 22 | 0.80 | EVA | 20 | 38.3 |
| Comparative example 1 | Air-through | 22 | 0.80 | - | - | 17.3 |

The animal excrement process sheet according to the present invention is not limited to the above described each embodiment and each example, and without departing from the scope of the object and the purpose of the present invention, a plurality of techniques described in each embodiment and each example may be suitably combined, substituted and modified. Incidentally, in the present description, the ordinal numbers such as "the first", and "the second", etc., are for the purpose of distinguishing the matter to which such ordinal numbers are allotted, and they do not mean the order, the priority, the significance, etc., of each matter.

REFERENCE SIGNS LIST

1     animal excrement process sheet
2     top sheet
3     absorbent body
4     back sheet
6     water preventing portion
$A_1$     center portion
$A_2$     outer periphery portion
$F_1$     first surface

**Claims**

1. An animal excrement process sheet which includes a liquid permeable top sheet, a liquid impermeable back sheet, and an absorbent body that is positioned between the top sheet and the back sheet, the animal excrement process sheet comprising:

    a first surface which is a supply surface of excrement, and a second surface which is an opposite surface of the first surface,
    a center portion which is positioned at a center of the animal excrement process sheet, in a plan view, and is partitioned as a portion in which the top sheet, the absorbent body, and the back sheet overlap in a thickness direction, and
    an outer periphery portion which surrounds the center portion, extends from an outer edge of the center portion toward an outer edge of the animal excrement process sheet, and in which the top sheet and the back sheet are joined in the thickness direction, wherein
    the animal excrement process sheet further comprises:
    a water preventing portion which extends in the outer periphery portion so as to surround the center portion, and includes a hydrophobic agent which is arranged in the thickness direction from a surface on a first surface side of the back sheet across a surface on a first surface side of the top sheet.

2. The animal excrement process sheet according to claim 1, wherein
the top sheet is configured by a sheet - like fiber structure body, and
in the water preventing portion, the hydrophobic agent covers at least surfaces of configuration fibers of the fiber structure body.

3. The animal excrement process sheet according to claim 1 or 2, wherein
the top sheet is configured by a sheet - like fiber structure body, and
in the water preventing portion, the hydrophobic agent is filled at least in a void in configuration fibers of the fiber structure body.

4. The animal excrement process sheet according to any one of claims 1 to 3, wherein
a width of a portion in the water preventing portion which corresponds to a region on the first surface side of the top sheet is wider than a width of a portion in the water preventing portion which corresponds to a region on a second surface side of the top sheet.

5. The animal excrement process sheet according to any one of claims 1 to 3, wherein
a width of a portion in the water preventing portion which corresponds to a region on a second surface side of the top sheet is wider than a width of a portion in the water preventing portion which corresponds to a region on the first surface side of the top sheet.

6. The animal excrement process sheet according to any one of claims 1 to 5, wherein
a fiber density of a region in the top sheet which corresponds to a portion on a first surface side of the water preventing portion is lower than a fiber density of a region in the top sheet which corresponds to a portion on a second surface side of the water preventing portion.

7. The animal excrement process sheet according to any one of claims 1 to 5, wherein
a fiber density of a region in the top sheet which corresponds to a portion on a second surface side of the water preventing portion is lower than a fiber density of a region in the top sheet which corresponds to a portion on a first surface side of the water preventing portion.

8. The animal excrement process sheet according to any one of claims 1 to 7, wherein
the hydrophobic agent includes a water repellent agent.

9. The animal excrement process sheet according to claim 8, wherein
the water repellent agent includes at least one of a paraffin - based water repellent agent, a silicon - based water repellent agent, and a fluorine - based water repellent agent.

10. The animal excrement process sheet according to any one of claims 1 to 9, wherein
the top sheet includes an air -through nonwoven fabric in which bulk is recovered.

# FIG. 1

# FIG. 2

# FIG. 3

# FIG. 4

EP 3 760 038 A1

# FIG. 5

# FIG. 6

# FIG. 7

# FIG. 8

FIG. 9

# FIG. 10

# FIG. 11

FIG. 12

## INTERNATIONAL SEARCH REPORT

| International application No. |
|---|
| PCT/JP2018/007630 |

**A. CLASSIFICATION OF SUBJECT MATTER**
Int. Cl. A01K1/015(2006.01)i

According to International Patent Classification (IPC) or to both national classification and IPC

**B. FIELDS SEARCHED**

Minimum documentation searched (classification system followed by classification symbols)
Int. Cl. A01K1/015, A01K23/00

Documentation searched other than minimum documentation to the extent that such documents are included in the fields searched
Published examined utility model applications of Japan       1922-1996
Published unexamined utility model applications of Japan    1971-2018
Registered utility model specifications of Japan           1996-2018
Published registered utility model applications of Japan   1994-2018

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 3192208 U (UNO, Miho) 09 July 2014, paragraphs [0016]-[0024], fig. 2 (Family: none) | 1-3, 8-10<br>4-7 |
| Y | JP 2-111363 A (KAO CORP.) 24 April 1990, page 2, upper right column, line 7 to lower right column, line 3, fig. 8 (Family: none) | 1-3, 8-10 |
| Y | JP 10-28700 A (OJI PAPER CO., LTD.) 03 February 1998, paragraphs [0001], [0011] (Family: none) | 9, 10 |
| Y | JP 2014-70317 A (UNI-CHARM CORP.) 21 April 2014, paragraphs [0002]-[0004] & US 2015/0211157 A1, paragraphs [0002]-[0004] & EP 2902537 A1 & CN 103710883 A | 10 |

☐ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 29.03.2018 | 10.04.2018 |

| Name and mailing address of the ISA/<br>    Japan Patent Office<br>    3-4-3, Kasumigaseki, Chiyoda-ku,<br>    Tokyo 100-8915, Japan | Authorized officer<br><br><br>Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP H10313721 B